(19) Europäisches Patentamt
European Patent Office
Office européen des brevets

(11) **EP 3 846 635 B1**

(12) **EUROPEAN PATENT SPECIFICATION**

(45) Date of publication and mention
of the grant of the patent:
**07.12.2022 Bulletin 2022/49**

(21) Application number: **19761823.4**

(22) Date of filing: **28.08.2019**

(51) International Patent Classification (IPC):
***A23G 9/32*** *(2006.01)*

(52) Cooperative Patent Classification (CPC):
**A23G 9/327**

(86) International application number:
**PCT/EP2019/072994**

(87) International publication number:
**WO 2020/048849 (12.03.2020 Gazette 2020/11)**

(54) **FROZEN CONFECTION**

GEFRORENES KONFEKT

CONFISERIE SURGELÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018 EP 18193148**

(43) Date of publication of application:
**14.07.2021 Bulletin 2021/28**

(73) Proprietor: **Unilever IP Holdings B.V.**
**3013 AL Rotterdam (NL)**

(72) Inventors:
  • **DOMBURG, Bastiaan**
    **3132 BD Vlaardingen (NL)**
  • **GROOT, Robert, Dick**
    **3054 CS Rotterdam (NL)**
  • **LLOYD, David, Matthew**
    **Tring, Hertfordshire HP23 6BG (GB)**
  • **MILES, Thomas, James**
    **Sharnbrook Bedford Bedfordshire MK44 1LQ (GB)**

  • **POPP, Alois, Konrad**
    **3133 AT Vlaardingen (NL)**
  • **SAMMOUTI, Rafaella**
    **Sharnbrook Bedford Bedfordshire MK44 1LQ (GB)**
  • **TAMMES, Harmannus**
    **3133 AT Vlaardingen (NL)**
  • **VAN DER WEG, Pieter, Broer**
    **2651 HZ Berkel en Rodenrijs (NL)**

(74) Representative: **Askew, Sarah Elizabeth**
    **Unilever PLC**
    **Unilever Patent Group**
    **Bronland 14**
    **6708 WH Wageningen (NL)**

(56) References cited:
**EP-A1- 0 986 959      EP-A1- 1 875 810**
**WO-A1-2007/071405    WO-A1-2012/168722**
**JP-A- S6 463 341**

**Description**

<u>**TECHNICAL FIELD OF INVENTION**</u>

The present invention relates to a water-in-oil emulsion, in particular a water-in-oil emulsion suitable for the manufacture of a frozen confection. The present invention also relates to a frozen confection made from the water-in-oil emulsion, and a process for preparing the resultant frozen confection.

<u>**BACKGROUND TO INVENTION**</u>

Typical ice cream consists of about 30% ice, 50% air, 5% fat and 15% matrix (sugar solution) by volume. It therefore contains all three states of matter: solid ice and fat, liquid sugar solution and gas. The fat is comprised in a fat-in-water (or "oil-in-water") emulsion that is formed as set out below. Solid and gas are in the form of small particles - ice crystals, fat droplets and air bubbles - in a continuous liquid phase, the matrix. Colloidal dispersions consist of small particles of one phase (solid, liquid or gas) in another continuous phase. Particle size may range from nanometres to tens of microns. Colloidal dispersions have a very large surface area for their volume. Therefore, the surface properties of the phases have a large influence on the properties as a whole. Typical ice cream is simultaneously an emulsion (fat droplets), a sol (ice crystals) and a foam (air). Ice cream manufacture involves the steps of: mix preparation; pasteurization and homogenization; ageing; freezing; and hardening.

The first step in the manufacture of ice cream is the preparation of the mix. The mixing process is designed to blend together, disperse, hydrate, and dissolve the ingredients in the minimum time with optimal energy usage. Once all ingredients have been added, the mix should be homogeneous at or above about 65°C. The shear forces from the stirring produce a coarse oil-in-water emulsion with relatively large fat droplets (about 10 $\mu$m in diameter).

The mix is next pasteurized to reduce the number of viable micro-organisms to a level that is safe for human consumption, and homogenized to break the fat particles down into many small droplets. A large amount of energy is needed to heat the mix up to the pasteurization temperature. To maximize the energy efficiency, heating can occur in two stages. In the first stage, the mix is taken from the mix tank and passed through a plate heat exchanger. This is designed to ensure good heat transfer and to allow easy cleaning, and consists of two separate flow systems which pass through alternate plates. The first flow system contains the incoming mix, and the second contains hot mix that has already been pasteurized and homogenized. Thus, the incoming mix is heated up and the pasteurized and homogenized mix undergoes the first stage of cooling, which is necessary before the next step in the manufacturing process. In the second heating step, the mix is further heated with hot water in another section of the plate heat exchanger. At the end of this stage the mix must be hot enough to ensure that the pasteurization temperature is achieved after homogenization. The temperature should not exceed approximately 81°C in order to prevent denaturation of the milk proteins and to avoid the introduction of off-flavours.

In the homogenizer the hot mix (>70°C) is forced through a small valve under high pressure (typically up to about 150 atmospheres). The large fat droplets are elongated and broken up into a fine emulsion of much smaller droplets (about 1 to 4 $\mu$m in diameter), greatly increasing the surface area of the fat. Sometimes a second homogenization step is used with a lower pressure (about 35 atmospheres) in order to reduce clustering of the small fat droplets after the first stage.

After homogenization, the milk proteins readily adsorb to the surface of the fat droplets. The proteins are mostly adsorbed on the aqueous side of the fat/matrix interface, with hydrophobic parts at the interface. Free casein, casein micelles and whey have different surface activities, so they adsorb differently onto the fat droplets; for example, casein adsorbs more than whey. Proteins are very good at stabilizing oil-in-water emulsions against coalescence because they provide a strong, thick membrane around the fat droplet. Interactions between the proteins on the outside of the droplets make it harder for the droplets to come into close contact.

Pasteurization may also take place in the holding tube, a length of pipe from the homogenizer outlet whose length and diameter are chosen to ensure that the mix is held at the pasteurizing temperature for the required time. A typical pasteurization regime is a temperature of 80.5°C and a holding time of 31s.

After pasteurization the mix is cooled, then aged during which the emulsifiers adsorb to the surface of the fat droplets, replacing some of the milk protein. As the mix cools the mono-/diglycerides begin to crystallize, making them more hydrophobic so that they adsorb more strongly to the fat droplets. The emulsifiers have their fatty acid chains in the fat phase, and the polar part at the surface. Displacement of some of the protein by emulsifiers produces a weaker membrane. The membrane is strong enough to stabilize the emulsion under the static conditions in the ageing tank, but makes the emulsion unstable under shear in the freezer. After this, the fat inside the droplets begins to crystallize. Crystallization is slow because nucleation must occur inside each individual droplet. Crystalline mono-/diglycerides and high melting point triglycerides promote fat crystallization by acting as nucleation points. Fat crystals may protrude through the droplet surface. Ageing must be long enough for crystallization to occur and for emulsifiers to displace some of the protein, since both of these processes are important precursors to the next stage in ice cream production. Without them, it is difficult to incorporate and stabilize air bubbles when the mix is frozen in the ice cream freezer.

Freezing typically occurs using scraped surface heat exchangers designed to remove heat from the viscous liquid of the ice cream mix. Ice cream freezers consist of a cylindrical barrel typically 0.2 m in diameter and 1 m long, although freezers designed for different production rates have barrels with a wide range of sizes. A refrigerant flows through a jacket and cools the outside of the barrel as it evaporates. Inside the barrel is a rotating stainless steel dasher driven by an electric motor. The dasher is equipped with scraper blades that fit very closely inside the barrel. The dasher has two functions: to subject the mix to high shear, and to scrape of the layer of ice crystals that forms on the very cold barrel wall. There are two types of dasher, open and closed. Open dashers have an open cage supporting the scraper blades, within which is a passively rotating whipper. The dasher occupies 20-30% of the volume of the barrel. Open dashers give lower shear and longer residence times than closed ones for the same outlet temperature and throughput. Open dashers are generally used for ice cream production. The longer residence time helps to achieve good aeration.

Ice cream mix at approximately +4°C is pumped from the ageing tank into the barrel, where it is aerated and frozen before being pumped out from the other end. Air is injected into the barrel. Initially the air forms large bubbles. It is essential to create (and maintain) a dispersion of small air bubbles in order to obtain good quality ice cream. The beating of the dasher shears the large air bubbles and breaks them down into many smaller ones: the larger the applied shear stress, the smaller the air bubbles. Long residence times also lead to small air bubbles. It is easier to whip air into a foam that consists of a large volume fraction of liquid and a small volume fraction of air than vice versa. The high pressure inside the barrel reduces the volume of the air that has been introduced, and therefore makes it easier to aerate further.

The shear also causes some of the fat droplets to collide with each other and coalesce. The mixed protein-emulsifier layer is designed so that the emulsion is stable under static conditions but unstable under shear. Even though mono-/diglycerides and lecithin are called emulsifiers, their function in ice cream is to de-emulsify the fat. Needle-like fat crystals protruding from the droplet surface help this process. They can puncture the mixed protein-emulsifier layer on the other droplet, allowing the droplets to coalesce. The choice of fat type and the ageing process ensure that the fat in an ice cream mix is partly solid and partly liquid so that the droplets can partially coalesce, i.e. they form a cluster but retain some of their individual nature. Partially coalesced fat droplets are also known as de-emulsified or de-stabilized fat. Milk fat, coconut oil, palm oil and palm kernel oil are conventionally used because these are mostly solid at the temperatures at which freezing and aeration take place in an ice cream freezer, and therefore they undergo partial coalescence.

Whilst the mix is aerated, it is simultaneously frozen. Heat must be extracted from the mix both to cool it down (the sensible heat) and to freeze water into ice (the latent heat). Approximately five times more heat must be removed to freeze the water than to cool the mix down. As the mix passes along the barrel, its temperature decreases and its ice content increases. This causes the viscosity of the mix to increase: the viscosity of the sugar solution increases as the temperature decreases and the viscosity of the suspension increases as the volume fraction of ice increases. The ice content (i.e. the mass of ice as a percentage of the total mass) of a typical ice cream as a function of temperature (for example between 0 and -20°C) is known as the ice curve. The ice content of typical formulation is about 30% when it leaves the factory freezer at -5°C and about 55% at a typical storage temperature of -18°C.

It can therefore be appreciated that when ice cream leaves the factory freezer at about -5°C, its ice content is only about half that at a typical serving temperature of -18°C, so it is very soft. As set out above, the microstructure of dispersed ice crystals and air bubbles is thermodynamically unstable - the system tends towards a state in which the phases are less dispersed. If the ice cream were simply stored at the factory freezer exit temperature, it would deteriorate very quickly. The ice crystals and air bubbles would coarsen: their mean size would increase and their total number would decrease. Since it is not possible to stabilize the microstructure thermodynamically, it may instead be trapped kinetically, i.e. by slowing down the rate at which coarsening occurs so that significant deterioration of the microstructure does not take place. For these reasons, the temperature of the ice cream is lowered as quickly as possible after it leaves the factory freezer. This is known as hardening. Ice cream is usually hardened in a hardening tunnel, an enclosed chamber into which the ice cream passes on a conveyor belt from the factory freezer. Inside, cold air (typically -30 to -45°C) is blown over the ice cream. The lower the air temperature, and the faster the air flow, the faster heat is removed from the ice cream.

Ice creams are then stored in cold stores which are typically about -25°C and then distributed in a cold chain at approximately the same temperature before storage at the point of sale in freezers at approximately -18°C.

It is therefore clear that the manufacture of standard ice creams comprising fat-in-water emulsions requires very careful control of operating parameters in order to achieve the required emulsion. It also demands significant amounts of energy during the manufacture to achieve the microstructure, and also during in the storage of products so that the organoleptic properties arising from the microstructure may be retained through the supply chain of central storage, distribution to further logistics sites, subsequent transport to points of sale and then either consumption following purchase or further storage at home prior to consumption at a later time. It is well known that supply chains from the factory to points of consumption are of very variable quality and when the temperature falls outside an optimal window then products suffer. For example, if the temperature is too low, products are unacceptably hard and organoleptic properties suffer - in addition to the wasted energy consumption. Conversely, if the temperature is too warm then product quality suffers for the obvious reason of the melting of the ice and loss of the microstructure.

The present invention seeks to provide frozen confections that have a wider window of temperature stability. It also seeks to provide frozen confections that can be frozen at higher temperatures and therefore require less energy for cooling and freezing and that as a consequence can also be distributed in a supply chain at a higher temperature than is currently the standard - again, reducing energy consumption. It is also an objective of the invention to provide an unfrozen emulsion product that can be provided and stored at an ambient temperature or provided and stored at refrigerator temperatures of approximately 4°C that can, after potentially mixing in further additions, be frozen later in the supply chain or at home, therefore greatly reducing the cold section of the supply chain and hence energy consumption.

The prior art has sought to address these challenges in various ways for example by using high levels of stabilisers, complex emulsifier systems and other approaches in the standard oil-in-water based formulations.

EP 0 986 959 A1 discloses a coating composition for frozen desserts in the form of a water-in-oil emulsion. EP 1 875 810 A1 relates to a low-fat, water-in-oil confectionery emulsion.

There is however a need for an improved frozen confection that addresses the challenges set out above and that enables simple, low cost manufacture.

The present inventors have surprisingly found that if a radically different format and formulation is utilised, then a frozen confection that addresses these challenges can be provided. The frozen confection of the invention therefore comprises a water-in-oil (also known as "w-i-o", "w/o") emulsion as opposed to the oil-in-water emulsion of typical frozen confections.

Frozen confections comprising a water-in-oil emulsion have been described in the prior art, in particular JP 64/063,341 attempted to provide such a product. However, as will be seen in the examples below, the resulting product was not acceptable as a frozen confection for reasons of structural, organoleptic, and palatability deficiencies.

There is therefore a need for an improved frozen confection that addresses the challenges set out above.

The present invention provides a water-in-oil emulsion suitable for the manufacture of a frozen confection; a precursor oil phase for the preparation of the water-in-oil emulsion from the precursor oil phase and a precursor water phase; a process for the preparation of the water-in-oil emulsion from the precursors; a process for the preparation of a frozen confection from the water-in-oil emulsion of the first aspect; and a frozen confection comprising the water-in-oil emulsion.

## SUMMARY OF INVENTION

Water-in-oil emulsion for the preparation of a frozen confection

In a first aspect, the invention provides a water-in-oil emulsion for the preparation of a frozen confection, the emulsion comprising a water phase (WP) and an oil phase (OP) in a weight ratio (WP:OP) of from 94:6 to 70:30 wherein:

- the oil phase comprises at least an edible oil and an emulsifier, the emulsifier having an average HLB of from 0.1 to 5;
- the water phase comprises at least water and one or more freezing point depressors selected from the group consisting of sugars, salts or sugar alcohols or a mixture thereof;
- the emulsion comprises at least (W × A) wt% emulsifier by weight of the emulsion where:

  • W is the proportion of the water phase in the emulsion expressed as the weight percentage of the total emulsion; and
  • A is 0.0001;

- the emulsion comprises at most (O × 0.2) wt% emulsifier by weight of the emulsion where:

  • O is the proportion of the oil phase in the emulsion expressed as the weight percentage of the total emulsion;

- the emulsion comprises from 4 to 40 wt% of the one or more freezing point depressors by weight of the emulsion; and
- the temperature at which the edible oil contains 25 wt% solid fat by weight of the edible oil is lower than the temperature at which the water phase contains 25 wt% ice by weight of the water phase.

Process for the preparation of the water-in-oil emulsion

In a second aspect, the invention provides a process for the preparation of the water-in-oil emulsion of the first aspect, the process comprising the steps of:

- preparing a precursor water phase comprising:

  • water in an amount of from 45 to 96 wt% by weight of the precursor water phase;
  • one or more freezing point depressors selected from the group consisting of sugars, salts or sugar alcohols or a mixture thereof in an amount of from 4 to 40 wt% by weight of the precursor water phase;

- preparing a precursor oil phase comprising:

  • an edible oil in an amount of from 90 to 97.9 wt% by weight of the precursor oil phase;
  • an emulsifier in an amount of from 0.05 to 20 wt% by weight of the precursor oil phase, the emulsifier having an average HLB of from 0.1 to 5,

  wherein the temperature at which the edible oil contains 25 wt% solid fat by weight of the edible oil is lower than the temperature at which the water phase contains 25 wt% ice by weight of the water phase;
- combining the precursor water phase with the precursor oil phase while mixing, so as to form the water-in-oil emulsion, wherein the weight ratio of water phase (WP) to oil phase (OP) of the resulting water-in-oil emulsion is from 94:6 to 70:30;
- wherein the emulsification step is carried out at a temperature which is greater than the melting point of the precursor water phase.

Precursor oil phase

The precursor oil phase comprises:

- an edible oil in an amount of from 90 to 97.9 wt% by weight of the precursor oil phase; and
- an emulsifier in an amount of from 0.05 to 20 wt% by weight of the precursor oil phase, the emulsifier having an average HLB of from 0.1 to 5.

  • wherein the melting point of the edible oil is less than the melting point of the precursor water phase used to prepare the water-in-oil emulsion.

Preferably the precursor oil phase comprises edible oil in an amount of at least 91 wt% by weight of the precursor oil phase, more preferably at least 92 wt%, more preferably still at least 93 wt%, yet more preferably at least 94 wt%, even more preferably at least 95 wt%, yet more preferably still at least 96 wt%.
Preferably the precursor oil phase comprises edible oil in an amount of at most 97.8 wt% by weight of the precursor oil phase, more preferably at most 97.7 wt%, at most 97.6 wt%, at most 97.5 wt%, at most 97.4 wt%, at most 97.3 wt%, at most 97.2 wt%, or even at most 97.1 wt%.
Preferably the precursor oil phase comprises emulsifier in an amount of at least 0.1 wt% by weight of the precursor oil phase, more preferably at least 0.25 wt%, at least 0.5 wt%, at least 1 wt%, at least 2.5 wt%, or even at least 5 wt%.
Preferably the precursor oil phase comprises emulsifier in an amount of at most 10 wt% by weight of the precursor oil phase, more preferably at most 9 wt%, at most 8.5 wt%, at most 8 wt%, at most 7.5 wt%, at most 7 wt%, at most 6.5 wt%, or even at most 6 wt%.

Precursor water phase

The invention utilises a precursor water phase for the preparation of the water-in-oil emulsion of the first aspect, the precursor water phase comprising:

- water in an amount of from 45 to 96 wt % by weight of the precursor water phase;
- one or more freezing point depressors in an amount of from 4 to 40 wt% by weight of the precursor water phase.

Preferably the precursor water phase comprises water in an amount of at least 50 wt% by weight of the precursor water phase, more preferably at least 55 wt%, at least 60 wt%, or even at least 65 wt%.
Preferably the precursor water phase comprises water in an amount of at most 90 wt% by weight of the precursor water phase, more preferably at most 80 wt%, at most 75 wt%, or even at most 70 wt%.

Preferably the precursor water phase comprises one or more freezing point depressors in an amount of at least 5 wt% by weight of the precursor water phase, more preferably at least 7.5 wt%, at least 10 wt%, at least 15 wt%, or even at least 20 wt%.

Preferably the precursor water phase comprises one or more freezing point depressors in an amount of at most 35 wt% by weight of the precursor water phase, more preferably at most 30 wt%, more preferably still at most 25 wt%.

Preferably the precursor water phase has an overrun of from 10% to 500%, more preferably 20% to 450%, 30% to 400%, 40% to 350%, 50% to 300%, 60% to 275%, 70% to 250%, 80% to 200%, or even 90% to 150%.

<u>Process for the preparation of a frozen confection</u>

In a third aspect, the invention provides a process for the preparation of a frozen confection wherein the water-in-oil emulsion of the first aspect is quiescently frozen.

Preferably the emulsion is frozen at a temperature of no less than -20°C, more preferably no less than -18°C, more preferably no less than -16°C, more preferably no less than - 14°C, more preferably no less than -12°C, more preferably no less than -10°C.

<u>Frozen confection</u>

In a fourth aspect the invention provides a frozen confection comprising the water-in-oil emulsion of the first aspect. The frozen confection of the fourth aspect may be prepared using the process of the third aspect.

Preferably the frozen confection has an overrun of from 10% to 200%, more preferably 20% to 190%, 30% to 180%, 40% to 170%, 50% to 160%, 60% to 150%, 70% to 140%, 80% to 130%, or even 90% to 120%.

## DETAILED DESCRIPTION OF INVENTION

FROZEN CONFECTION

Definitions and descriptions of various terms and techniques used in frozen confectionery manufacture are found in Ice Cream, 7th Edition, H. Douglas Goff and Richard W. Hartel (2013), Kluwer Academic/Plenum Publishers. All percentages, unless otherwise stated, refer to the percentage by weight, with the exception of percentages cited in relation to the overrun.

As used herein, the term frozen confection means a confection intended for consumption in the frozen state (i.e. under conditions wherein the temperature of the confection is less than 0°C, and preferably under conditions wherein the confection comprises significant amounts of ice).

WEIGHT RATIO OF WATER PHASE TO OIL PHASE

In the present invention, the liquid to be dispersed is the water phase while the liquid the water phase is dispersed into is the oil phase. The water-in-oil emulsion is therefore made by combining a precursor oil phase with a precursor water phase. The oil phase is the continuous phase of the emulsion. The present invention can provide a stable water-in-oil emulsion with very low levels of oil phase relative to the water phase, in particular a water-in-oil emulsion with 94 wt% water phase dispersed in only 6 wt% oil phase - i.e. the weight ratio of water phase to oil phase (WP:OP) is 94:6. Preferably the weight ratio of water phase to oil phase (WP:OP) is at most 92:8, more preferably 90:10, more preferably 85:15, more preferably 80:20, more preferably 75:25. Preferably the weight ratio of water phase to oil phase (WP:OP) is at least 72.5:27.5.

EDIBLE OIL

By edible is meant fit to be eaten by humans. By oil is meant a neutral, nonpolar chemical substance that is a viscous liquid at ambient temperatures (approx. 20°C) and is both hydrophobic and lipophilic. In the context of the present invention edible oils means oils that are liquid at the temperature at which the precursor oil phase is prepared. The main constituents of edible oils are triacylglycerides, which comprise three fatty acids joined together by one glycerol molecule.

TYPES OF EDIBLE OIL

Preferably the edible oil is selected from: rice bran oil, avocado oil, safflower oil, arachide oil, hazelnut oil, soybean oil, almond oil, sunflower oil, pumpkin oil, hemp oil, rapeseed oil, corn oil, grapeseed oil, linseed oil, or walnut oil, or a combination thereof. More preferably the edible oil is selected: corn seed oil, grape oil, linseed oil, sunflower oil, rapeseed oil, hemp oil or walnut oil, or a combination thereof.

SOLIDIFICATION POINT OF EDIBLE OIL RELATIVE TO WATER PHASE

It has been found that the water-in-oil emulsion of the invention requires that the temperature at which the edible oil begins to solidify is lower than the temperature at which the water phase begins to solidify. For the avoidance of doubt, it is the solidification of the edible oil itself that is important, as opposed to the solidification of the oil phase as a whole. Additionally, it is the temperature at which the overall water phase (including the additional components such as the freezing point depressors) begins to solidify that is important, not merely the water itself.

Without wishing to be bound by theory, it is believed that when the requirement that the solidification point of the edible oil is lower than the solidification point of the water phase is met, the consequence is that when the emulsion is frozen to prepare a frozen confection it is the water phase that first solidifies and ice crystals are therefore formed at a stage when the edible oil (and hence the continuous phase of the emulsion) remains liquid. Consequently, the oil phase remains plastic and is not disrupted by the formation of the ice crystals in the water phase. Any edible oil that fulfils this requirement can be used in this invention.

The skilled person will appreciate that the determination of the specific solidification point of a liquid (i.e. the point at which fat crystals begin to form in the case of the edible oil or ice crystals begin to form in the case of the water phase) can be experimentally difficult to ascertain. Therefore, in the context of the present invention the temperature at which the edible oil contains 25 wt% solid fat is used for the edible oil. Similarly, the temperature at which the water phase contains 25 wt% ice is used for the water phase.

It is therefore a requirement of the present invention that the temperature at which the edible oil contains 25 wt% solid fat is less than the temperature at which the water phase contains 25 wt% ice.

TEMPERATURE AT WHICH THE EDIBLE OIL CONTAINS 25% SOLID FAT

The temperature at which the edible oil contains 25 wt% solid fat can be determined using differential scanning calorimetry (DSC), a thermoanalytical technique in which the difference in the amount of heat required to increase the temperature of a sample and reference is measured as a function of temperature. As a solid oil sample melts to a liquid oil, it requires more heat to flow into the sample to increase its temperature at the same rate as the reference. This is due to the absorption of heat by the sample as it undergoes the endothermic phase transition from solid to liquid. By observing the difference in heat flow between the sample and reference, differential scanning calorimeters are able to measure the amount of heat absorbed or released during such transitions and hence identify the melting point of a sample.

DSC measurements were performed with a differential scanning calorimeter DSC 8500 (Pyris, Perkin Elmer Inc.). The instrument is calibrated with indium ($\Delta$Hf=28.5 J/g, melting temperature = 156.6°C) before actual measurements took place. Oil samples of approximately 20 mg are put into small aluminium pans. An empty pan is used as reference while the changes in heat capacity are measured. The following measurement is applied. At first, the sample is kept for 5 minutes at 20°C. Then a heating step takes place to 60°C. After this heating step the sample is cooled to -80°C, followed by a final heating step to 60°C again. For both heating and cooling steps, a temperature gradient of 2°C/min is applied. The data obtained from the measurement is exported into Excel for further analysis and the relevant point identified from the resulting DSC curve by the following procedure: First, the uncorrected heat flow is corrected by division by the sample weight. Then, a baseline is constructed by fitting a polynomial of order 4 through the data at the extreme temperatures (below -60°C and above 40°C) at which heat flow peaks representing a phase transition (crystallization/melting) are absent. The baseline is then subtracted from the complete data set and the remaining area integrated. The complete integrated area is converted into 100%, and a partial integration is conducted from -80°C to each other temperature, to arrive at a curve representing the solid fat content as a percentage. The temperature at which the edible oil contains 25 wt% solid fat is determined from the resulting curve.

The temperature at which various different edible oils contain 25 wt% solid fat are provided in the following table.

| Oil | Temp. at which oil contains 25 wt% solid fat (°C) |
| --- | --- |
| Olive Oil | 0 |
| Rice bran | -6 |
| Avocado | -4 |
| Safflower | -7 |
| Arachide | -6 |

(continued)

| Oil | Temp. at which oil contains 25 wt% solid fat (°C) |
|---|---|
| Hazelnut | -6 |
| Soybean | -4 |
| Almond | -7 |
| Sunflower seed | -13 |
| Pumpkin seed | -12 |
| Hemp | -13 |
| Rapeseed | -13 |
| Corn seed | -17 |
| Grape seed | -20 |
| Linseed | -24 |
| Walnut | -26 |

TEMPERATURE AT WHICH THE WATER PHASE CONTAINS 25% ICE

As set out herein, the water phase comprises water and freezing point depressors. The temperature at which the water phase contains 25 wt% ice can also be determined using DSC as described above, or may be calculated using techniques known in the art.

Preferably the temperature at which the edible oil contains 25 wt% solid fat is at least 4°C lower than the temperature at which the water phase contains 25 wt% ice, more preferably at least 6°C lower, yet more preferably at least 8°C lower, even more preferably at least 10°C lower, more preferably still at least 12°C lower, yet more preferably at least 14°C lower, most preferably at least 16°C lower.

Preferably the temperature at which the edible oil contains 25 wt% solid fat is at most 30°C lower than the temperature at which the water phase contains 25 wt% ice.

As a worked example:

-   When the temperature at which the edible oil contains 25 wt% solid fat is at least 4°C lower than the temperature at which the water phase contains 25 wt% ice, and the temperature at which the water phase contains 25 wt% ice is -1°C, then the temperature for the edible oil is at least -5°C (i.e. - 1°C minus 4°C = - 5°C).

Similarly:

-   When the temperature at which the edible oil contains 25 wt% solid fat is at least 8°C lower than the temperature at which the water phase contains 25 wt% ice, and the temperature at which the water phase contains 25 wt% ice is - 2°C, then the temperature for the edible oil is at least -10°C (i.e. - 2°C minus 8°C = - 10°C).

EMULSIFIER

By emulsifier is meant a surface-active agent or agents that can be used when surface tension needs to be decreased, in particular for food processing. A decrease in surface tension is required when one liquid needs to be dispersed in another, not miscible liquid. As mentioned, in the present invention, the liquid to be dispersed is the water phase while the liquid the water phase is dispersed into is the oil phase. The oil phase is therefore the continuous phase. In the present invention, the emulsifier is one factor necessary to enable the water-in-oil emulsion of the invention that can be used for the preparation of a frozen confection.

TYPES OF EMULSIFIERS

The emulsifier may be selected from the following:
Glycerin fatty acid esters including monoglycerides, preferably unsaturated monoglycerides;
Organic acid esters of monoglycerides including acetic acid esters of monoglycerides (acetylated MG- ACETEM), citric acid esters of monoglycerides (CITREM), lactic acid esters of monoglycerides (LACTEM), succinic acid esters of monoglycerides, preferably acetic acid ester of monoglyceride and/or Lactic acid esters of monoglycerides:

Polyglycerol esters of fatty acid including PGE;
Sorbitan esters of fatty acid including sorbitan esters of monostearate, tristearate, monolaureate, monooleate, and monopalmitate;
Propylene glycol esters of fatty acid including propan-1,2, diol (propylene glycol) esters of fatty acid;
Sucrose esters of fatty acids including sucroglycerides;
Polyglycerol polyrhizoleate (PGPR);
Lecithins (a mixture containing phospholipid as the major component, widely found in animals and plants), preferably soy lecithins examples including Yelkin and Beakin; Egg yolk (typically a mixture of lipids (30%), protein (16%), carbs (3.5%) and 9% lecithins);
or mixtures thereof.

More preferably the emulsifier is selected from: glycerin fatty acid esters, organic acid esters of monoglycerides, polyglycerol esters of fatty acid, sorbitan esters of fatty acid, propylene glycol esters of fatty acid, sucrose esters of fatty acid, polyglycerol polyrhizoleate, lecithins, and egg yolk, or a mixture thereof.

HYDROPHILIC-LIPOPHILIC BALANCE (HLB)

By HLB is meant the hydrophilic-lipophilic balance of an emulsifier. HLB is a measure of the degree to which a surfactant molecule is hydrophilic or lipophilic. HLB can be calculated from the surface properties of the molecule. The average HLB of a mixture of surfactants of the same ingredient type can be calculated as:

$$Average\ HLB = \sum_{k=0}^{n} wt[\%]_k \, HLB_k \quad .$$

The average HLB of the emulsifier in the present invention is from 0.1 to 5. Preferably the average HLB of the emulsifier is from 0.25 to 4, more preferably from 0.5 to 3.5, more preferably still from 1 to 3, even more preferably from 1 to 2.

AMOUNT OF EMULSIFIER IN THE EMULSION BY WEIGHT

It will be appreciated that as the proportion of the water phase increases, the amount of oil phase available to form the continuous oil phase of the water-in-oil emulsion will correspondingly decrease and so it is desirable that more emulsifier is present to account for this factor. The minimum amount by weight of emulsifier in the emulsion is therefore expressed as (W × A) where W is the proportion of the water phase in the emulsion expressed as the weight percentage of the total emulsion and A is a coefficient that ensures an adequate level of emulsifier. A is therefore at least 0.0001. Preferably A is 0.00025, more preferably 0.0005, more preferably 0.001, more preferably 0.0025, more preferably 0.005, more preferably 0.01, more preferably 0.025, more preferably 0.05.
It will also be appreciated that the emulsifier is provided as part of the oil phase and therefore that increasing levels of emulsifier as a proportion of the oil phase will also decrease the amount of oil available to form the continuous oil phase of the water-in-oil emulsion. Therefore, the maximum amount of emulsifier in the emulsion by weight is at most (O × 0.2) where O is the proportion of the oil phase (including all additional components of the oil phase, i.e. oil, emulsifier, and other ingredients of the oil phase) in the emulsion expressed as the weight percentage of the total emulsion - i.e. the level of emulsifier is not more than 20 wt% of the oil phase. Preferably the maximum amount of emulsifier in the emulsion by weight is at most (O × 0.175) wt%, more preferably (O × 0.15) wt%, or even (O × 0.1) wt% emulsifier by weight of the emulsion.

FREEZING POINT DEPRESSORS

By freezing point depressor is meant edible ingredients that can decrease the freezing point of water. These are usually small molecules that can be dissolved in high concentrations in water.
Preferably the emulsion comprises one or more freezing point depressors in an amount of at least 5 wt% by weight of the emulsion, more preferably at least 7.5 wt%, at least 10 wt%, at least 15 wt%, or even at least 20 wt%. Preferably the emulsion comprises one or more freezing point depressors in an amount of at most 37.5 wt% by weight of the emulsion, more preferably at most 35 wt%, at most 30 wt%, or even at most 27.5 wt%.

The one or more freezing point depressors is selected from the group consisting of sugars, salts or sugar-alcohols or a mixture thereof. Preferably the sugars are monosaccharide, preferably glucose, fructose, galactose, or a mixture thereof, or disaccharides, preferably sucrose, lactose, maltose, or a mixture thereof. Preferably the sugar-alcohols are selected from the list comprising glycerol, erythritol, sorbitol, maltitol, mannitol, and lactitol. Oligosaccharides may optionally be included as freezing point depressors.

FAT STRUCTURANT

By fat structurant is meant a fat that has a melting point that is higher than the melting point of the edible oil and also higher than the temperature at which the emulsion is made. Consequently, when used, the fat structurant is present in the precursor oil phase as small particles when the emulsion is formed.

Fat structurants may be produced by a votator process from blends of an oil of low melting point with an oil of high melting point. In such a process the oil blend is cooled to a temperature at which the oil of low melting point is still liquid but the oil of high melting point already solid, and pumped through a vessel with a scraper. The vessel is also cooled to such low temperature, and while a solid fat layer tends to form at the surface of the vessel, the layer is constantly scraped off, which results in small disc-like particles. The particles are small but sufficient to structure the oil phase, increasing the viscosity of the emulsion and the freeze-thaw stability of the resultant frozen confection.

Fat structurants may be a single fat or a mixture of fats, with possible origin being animal, dairy or vegetable fats. Preferred are vegetable fats.

Without wishing to be bound by theory, it is believed that the small fat crystals of the fat structurant form a percolating network throughout the oil phase, giving the oil phase resilience. The thinner the oil phase is spread, as a result of emulsifying a water phase into this oil phase, the more these fat crystals act as a stabilizer of the oil-films stabilizing the intermediate emulsion. During freezing the crystals provide tensile strength to the oil films, stacking and gliding along each other to provide a barrier between the ice crystals that form during freezing. The small fat crystals in the oil phase provide a tensile strength to the oil phase that protects it from the growth of ice crystals from the water phase during freezing. In an ambient application where the emulsion is supplied at ambient temperatures and the emulsion is frozen elsewhere (e.g. at the point of consumption) this principle is believed to be one of the mechanisms in achieving an ambient stable emulsion and to also have a role in the ambient oil phase or ambient water-in-oil emulsion.

The structuring fat is present in the oil phase based on an oil that is liquid at ambient temperature (20°C). This oil can be any oil, preferably of vegetable origin. The fat structurant is preferably a triglyceride fat. It may be a natural fat, such as palm kernel fat, or coconut fat, or a modified fat, such as a fat or fat blend subjected to hydrogenation, interesterification, enzymatic interesterification, fractionation (wet or dry) or blending. The fat structurant is present in the form of small crystals, which can be achieved by different processes.

Hydrogenation alters the degree of unsaturation of the fatty acids and therefore the fatty acid composition. This allows plastic fats to be made from liquid oils. Interesterification retains the fatty acid composition but alters the distribution of the fatty acids on the glycerol backbones. Interesterification can be done chemically or with the aid of enzymes. Usually, the mixture of two different fats, that by themselves are not suitable as a structuring fat, are subject to interesterification. The resulting interesterified fat will have improved structuring properties compared to the starting material.

Fat structurant oils can be fractionated, according to their triglyceride composition. Wet or dry fractionation is possible. For example, medium fractioned palm oil stearins (mfPOs) have shown to be viable alternatives to hardened fats.

Fats, due to their N-line (solid fat content dependent on temperature), which have been shown to serve as fat structurants are

- fully hardened high-erucic acid rapeseed oil with major triglyceride fractions containing long-chain saturated fatty acids of C18 and C22, with melting point 70°C (referred to herein as "RPh70"),
- hardened soybean oil (BO65) or hardened palm oil (referred to herein as "PO58"),
- fully hardened sunflower oil with melting point 69°C (referred to herein as "SF69"),
- interesterified fat blends with melting temperature 48°C (referred to herein as "ines48").

Preferably, the fat structurant has a solid fat content of at least 90 wt% at the temperature of emulsification.

The fat structurant can be combined with the edible oil by mixing the fat structurant and the oil at a temperature above the melting temperature of the structurant, and cooling the mixture to below room temperature in a votator, so that small crystals of the fat structurant oil are formed on the surface of the votator, from where they are constantly removed by the rotating scraper. The resulting mixture is a pourable oil/fat mixture of high viscosity.

Alternatively, the fat structurant can be obtained as a powder of very small particle (fat crystal) size. Such powder can be mixed with the liquid edible oil at room temperature.

Preferably the fat structurant is a hydrogenated fat. More preferably the fat structurant is selected from:

- hardened rapeseed oil with melting point 70°C (RPh70),
- fractionated palm oil with melting point 58°C (PO58),
- hardened sunflower oil with melting point 69°C (SF69), and
- interesterified fat of melting point 48°C (Ines48), or a combination thereof.

Preferably the oil phase of the emulsion comprises at least 0.05 wt% by weight of the emulsion of fat structurant, more preferably at least 0.1 wt%, more preferably at least 0.2 wt%, more preferably at least 0.3 wt%, more preferably at least 0.4 wt%.

Preferably the oil phase of the emulsion comprises at most 10 wt% by weight of the emulsion of fat structurant, more preferably at most 7.5 wt%, at most 5 wt%, at most 2.5 wt%, at most 1 wt%, or even at most 0.5 wt%.

Where a fat structurant is included in the oil phase of the emulsion, the emulsification step is carried out at a temperature which is less than the melting point of any such fat structurant.

STRUCTURING AGENT

Preferably the water phase comprises one or more structuring agents. By structuring agent is meant ingredients that control the viscosity of the water phase of the emulsion. Preferably the structuring agents are in the form of thickening agents such as fibres, polysaccharides or proteins. Polysaccharides or proteins can also form gels that do not only have viscosity but also elasticity. Viscosity and elasticity can be measured by rheology. The product may contain structuring agents such as polymers.

Preferably the water phase of the emulsion comprises at least 0.1 wt% by weight of the emulsion of structuring agent, more preferably at least 0.2 wt%, at least 0.3 wt%, at least 0.4 wt%, at least 0.5 wt%, at least 1 wt%, at least 2 wt%, at least 3 wt%, or even at least 4 wt%.

Preferably the water phase of the emulsion comprises at most 10 wt% by weight of the emulsion of structuring agent, more preferably at most 9 wt%, at most 8 wt%, at most 7 wt%, at most 6 wt%, or even at most 5 wt%.

Preferably the viscosity of the water phase is from 10 times less to 1000 times greater than the viscosity of the oil phase, more preferably from 2 times greater to 100 times greater, more preferably from 5 times greater to 75 times greater, more preferably from 5 times greater to 50 times greater (when measured at 1/s at the temperature of emulsification). By temperature of emulsification is meant the temperature at which the water phase and oil phase are combined to form the water-in-oil emulsion of the invention.

Preferably the structuring agent is selected from group consisting of Galactomannans, Glucomannans, Xanthan, Carrageenans (iota, kappa, lambda, etc.), Agar, starches, pectins (HM, LM- pectin), alginate, cellulose derivatives (methyl, ethyl- cellulose, HPMC, CMC), Plant fibers (Citrus fibers, tomato fibers, microfibrillated fibers), Gelatin, (acid) milk gels, Gellan, or mixtures thereof. Material from tamarind flower, furcelleran, gum tragacanth, gum karaya, or mixtures thereof may also be used.

Most preferred structuring agents are iota-carrageenan and/or modified tapioca starch since the water phase is the correct viscosity while being mixed into the oil to form an emulsion and also gels directly after the emulsification has taken place and delivers extra emulsion stability.

NUCLEATORS

In order to form the frozen confection, the water in the water phase needs to change into ice (i.e. nucleate). This can be achieved by a significant undercooling of a bulk of water, the smaller the bulk, the more pronounced the undercooling needs to be to get this so-called homogeneous nucleation. Since the water-in-oil emulsion of the present invention contains water in small droplets, the undercooling for homogeneous nucleation needs to be in the order of about 35°C for droplets of 10 $\mu$m diameter. Nucleators therefore allow freezing at higher temperatures. By nucleators is meant particles that play a role by promoting heterogeneous nucleation in each droplet.

Preferably the water phase of the emulsion comprises at least 0.1 wt% by weight of the emulsion of nucleators, more preferably at least 0.2 wt%, at least 0.3 wt%, at least 0.4 wt%, at least 0.5 wt%, at least 1 wt%, at least 2 wt%, at least 3 wt%, most preferably at least 3.5 wt%.

Preferably the water phase of the emulsion comprises at most 10 wt% by weight of the emulsion of nucleators, more preferably at most 9 wt%, at most 8 wt%, at most 7 wt%, at most 6 wt%, at most 5 wt%, mose preferably at most 4 wt%.

Preferably the nucleators comprise from 0.5 to 20 wt% protein powder, preferably skim milk powder, plant protein powder, soy powder, pulses, pea powder, or a mixture thereof. The nucleators may also comprise Laponite or Bentonite, preferably from 0.1 wt% to 1 wt% of Laponite or Bentonite.

AERATION

The term aeration or aerated means that gas has been intentionally incorporated into the emulsion, for example by mechanical means. The gas can be any gas, but is preferably, in the context of frozen confections, a food-grade gas such as air, nitrogen, nitrous oxide, or carbon dioxide. Hence the term aeration is not limited to aeration using air, and encompass the 'gasification' with other gases as well.

The extent of aeration is measured in terms of 'overrun' (with unit '%'), which is defined as:

$$overrun = \frac{\text{volume of aerated product - volume of initial mix}}{\text{Volume of initial mix}} \times 100\%$$

Preferably the water-in-oil emulsion of the invention has an overrun of from 10% to 200%, 20% to 190%, 30% to 180%, 40% to 170%, 50% to 160%, 60% to 150%, 70% to 140%, 80% to 130%, or even 90% to 120%.

PRECURSOR OIL PHASE

As set out above, the water-in-oil emulsion of the first aspect can be made by combining a precursor oil phase with a precursor water phase. The precursor oil phase comprises:

- an edible oil in an amount of from 90 to 97.9 wt% by weight of the precursor oil phase; and

- an emulsifier in an amount of from 0.05 to 20 wt% by weight of the precursor oil phase, the emulsifier having an average HLB of from 0.1 to 5,

wherein the melting point of the edible oil is less than the melting point of the precursor water phase.

For the avoidance of doubt, the edible oil, emulsifier, melting point (i.e. the solidification point of the edible oil relative to the water phase), and HLB are as defined above. Similarly, as detailed above, the oil phase may additionally comprise a fat structurant.

PROCESS FOR PREPARATION OF PRECURSOR OIL PHASE

The precursor oil phase may be prepared in ways known to the person skilled in the art. For example, the oil phase ingredients can be added to the structured oil in a mixer and dissolved into the oil. Where fat structurants are used, they will already be present in the oil. The ingredients are mixed, for example using a food mixer with a balloon whisk. During this process, air may be incorporated into the oil phase, for example from 50 to 200% overrun. It has been found that a significant part of this overrun is retained following emulsification, providing up to 10% overrun in the emulsion product. Overrun in the oil phase can also be created using aerators such as a Trefa T50 (Trefa Continu Aerating Systems B.V.).

PRECURSOR WATER PHASE

A precursor water phase is combined with the precursor oil phase to form the water-in-oil emulsion of the first aspect. As set out above, the precursor water phase comprises:

- water in an amount of from 45 to 96 wt% by weight of the precursor water phase; and

- one or more freezing point depressors selected from the group consisting of sugars, salts or sugar-alcohols or a mixture thereof in an amount of from 4 to 40 wt% by weight of the precursor water phase.

For the avoidance of doubt, details relating to the water content, the one or more freezing point depressors are as set out above. Similarly, as detailed above, the water phase may optionally comprise structuring agent(s) and/or nucleator(s).

SOLIDIFICATION POINT OF THE WATER PHASE:

As set out herein, the water phase comprises water and freezing point depressors. The temperature at which the water phase contains 25 wt% ice can be determined using DSC as described above, or may be calculated using techniques known in the art.

## MEASUREMENT OF VISCOSITY OF PRECURSOR WATER PHASES

The viscosity of both the precursor water phase and precursor oil phase can be measured by rheology. A protocol for measuring the viscosity is as follows:
Instrument AR G2 (TA Instruments, New Castle, Delaware, USA) is used in parallel plate geometry, 4cm plate with sandblasted surface, with a gap set to 1mm. The following measurement profile is specified in the software of the instrument: Viscometry, steady state flow test. The measurement temperature in the software of the rheometer is set to 25°C, and a steady state flow test defined.

The following parameters in the software are set to the indicated values:

- Pre-shear: Duration 10 sec at shear stress 0.79 Pa
- Equilibration time: 2 min
- Test 1: Steady state flow test, logarithmic, 6 points per decade, shear rate range 0.01/s to 500/s. Sample period 10 sec
- Steady state: Tolerance 5%, 3 consecutive measurements within tolerance, maximum point time 1 min
- Test 2 (back-cycle): Steady state flow test, logarithmic, 6 points per decade, shear rate range 500/s to 0.01/s. Sample period 10 sec
- Steady state: Tolerance 5%, 3 consecutive measurements within tolerance, maximum point time 1 min

1.5 to 2 ml of sample is loaded, and the plate lowered to the gap distance. Then, the measurement is started. The viscosity value at 1/s at the back cycle is taken to reflect the viscosity.

## PROCESS FOR PREPARATION OF PRECURSOR WATER PHASE

The precursor water phase may be prepared in ways known to the person skilled in the art. For example, the granular and powdered ingredients of the water phase can be dry mixed with the freezing point depressor(s) to enable quick and lump free dissolution. The powder mix may be slowly added into warm water (approx. 50°C) with mixing. After smooth dissolution, the mix is pasteurized typically for 6 minutes at 90°C which also allow the starch (if used) to gel. The mix is cooled to room temperature or below.

## AERATION OF PRECURSOR WATER PHASE

The precursor water phase may be aerated prior to emulsification with the oil phase to provide an aerated product.

Aeration may be achieved by mixing the prepared water phase at constant temperature of about 5°C for around 30 minutes. This can be done in ways known to the person skilled in the art, for example with a Kenwood food mixer at maximum speed setting with the whisk attachment.

Alternatively, aeration may be achieved by high shear mixing, preferably during cooling or by using a specialised aerator with back-pressure regulator (typically 10 atmosphere input, 2 atmosphere output) to enhance further swelling of bubbles after outlet.

Aeration may include the addition of suitable aeration agents (air stabilisers), although this is not required because the formulations of the present invention surprisingly deliver stable aerated products. Suitable aeration agents (air stabilisers) include but are not limited to PGE215, and Egg White Powder.

Preferably the precursor water phase has an overrun of from 10% to 500%, more preferably 20% to 450%, more preferably 30% to 400%, more preferably 40% to 350%, more preferably 50% to 300%, more preferably 60% to 275%, more preferably 70% to 250%, more preferably 80% to 200%, more preferably 90% to 150%.

## PROCESS FOR THE PREPARATION OF THE WATER-IN-OIL EMULSION

In a second aspect, the invention provides a process for the preparation of the water-in-oil emulsion of the first aspect. The process comprises an emulsification step which is carried out at a temperature which is greater than the melting point of the precursor water phase.

The emulsification step is preferably carried out at a temperature at which the fat structurant (if used) is solid (for example < 40°C), and the water phase not too liquid but also not a hard gel (for example between 40°C and 10°C but not below 0°C).

Without wishing to be bound by theory, it is believed that the emulsification step should be carried out at a temperature which is higher than the melting point of the precursor water phase, so that the precursor water phase is liquid enough to mix with the precursor oil phase under shear conditions. Also, this step should be carried out at a temperature which is greater than the melting point of the precursor oil phase, so that the precursor oil phase is liquid enough to mix with the precursor water phase under shear conditions. Finally, it is believed that the temperature at which the emulsification step is carried out should be lower than the melting point of any fat structurant in the precursor oil phase, so that the fat structurant is able to crystalize and function as described herein.

The resulting emulsion can be stored at ambient temperature or for prolonged time in refrigerator (approx. 5°C) and may be provided as an emulsion product for freezing at the point of consumption.

In an alternative process, the precursor water phase and the precursor oil phase can be combined in a weight ratio of precursor water phase to precursor oil phase of from 94:6 to 70:30 (by weight of the resulting water-in-oil emulsion) prior to mixing; and then mixed; wherein the temperature of emulsification is greater than the melting point of the precursor water phase and less than the melting point of any fat structurant in the precursor oil phase.

It can be readily appreciated that this very simple manufacturing process has many benefits over standard the standard process for the manufacture of frozen confections. For example only the precursor water phase needs to be pasteurized. There is no need for high pressure homogenisation. The temperature profile for adding ingredients is much simpler. There is no need for maturing of the pre-mix. The emulsion, once made, is stable over time, which makes it robust for further processing.

## PROCESS FOR THE PREPARATION OF A FROZEN CONFECTION

The invention provides a process for the preparation of a frozen confection wherein the water-in-oil emulsion of the first aspect is quiescently frozen (i.e. frozen with minimal or no: stirring; shear; agitation; or aeration).

Preferably the emulsion is frozen at a temperature of -20°C, more preferably -18°C, more preferably -16°C, more preferably -14°C, more preferably -12°C, more preferably -10°C.

It will be appreciated that there are significant advantages to being able to utilise quiescent freezing. Firstly, it provides a simpler process to that used for standard ice creams. In fact, standard oil-in-water emulsions cannot be manufactured using quiescent freezing. It also uses less energy than equipment such as a scraped surface heat exchanger. Moreover, the emulsion can be frozen at higher temperatures than typical ice cream manufacturing and consequently less energy is required for temperature extraction and freezing. Additionally, a hardening step is used in normal processing post scraped surface heat exchanger and more energy is required for this standard manufacture, but hardening is not required in the present invention. Finally, the resultant frozen confection can both be made and stored at a wide range of frozen temperatures, typically from as high as -6°C to -28°C, and below.

## FROZEN CONFECTION

The invention also provides a frozen confection comprising the emulsion of the first aspect. The frozen confection comprises a water-in-oil emulsion, the emulsion comprising a water phase (WP) and an oil phase (OP) in a weight ration (WP:OP) of from 94:6 to 70:30 wherein:

- the oil phase comprises at least an edible oil and an emulsifier, the emulsifier having an average HLB of from 0.1 to 5;
- the water phase comprises at least water and one or more freezing point depressors selected from the group consisting of sugars, salts or sugar-alcohols or a mixture thereof;
- the emulsion comprises at least (W × A) wt% emulsifier by weight of the emulsion where:

    • W is the proportion of the water phase in the emulsion expressed as the weight percentage of the total emulsion; and
    • A is 0.0001;

- the emulsion comprises at most (O × 0.2) wt% emulsifier by weight of the emulsion where:

    • O is the proportion of the oil phase in the emulsion expressed as the weight percentage of the total emulsion;

- the emulsion comprises from 4 to 40 wt% of the one or more freezing point depressors by weight of the emulsion; and
- the temperature at which the edible oil contains 25 wt% solid fat by weight of the edible oil is lower than temperature at which the water phase contains 25 wt% ice by weight of the water phase.

For the avoidance of doubt, all components of the water-in-oil emulsion of the frozen confection including but not limited to the edible oil, emulsifier, melting point, and HLB are as defined above in relation to the emulsion of the first aspect of the invention and are incorporated into this aspect of the invention *mutatis mutandis.*

ADDITIONAL INGREDIENTS

The resultant frozen confection may also comprise additional ingredients, for example: Flavourants, including vanilla flavour, strawberry flavour, lemon flavour, orange flavour, cherry flavour; Antioxidants including DBHA, BHT, alpha-tocopherol, gamma-tocopherol, quercetin, cyanidin, catechin, ferulic acid, caffeic acid; Colorants including Tartrazine, Riboflavin, curcumin, sunset yellow, zeaxanthin, carotene, bixin, lycopene, canthaxanthin, astaxanthin, apo-8'-carotenal, carmoisine, amaranth, ponceau 4R, carmine, anthocyanidin, erythrosine, red 2G, indigo carmine, patent blue V, brilliant blue FCF, chlorophyll, chlorophyllin copper complex, green S, black BN; Vitamins including Vitamin A, D, E, K1, B1, B2, B6, B12, C, Biotin, Niacin, Folic A; or mixtures thereof. These may be incorporated into the precursor oil phase, the precursor water phase, or the emulsion in appropriate ways known in the art. They may also be post-added to the frozen confection. Inclusions may also be added to the product in a similar manner. It may also optionally include inclusions and may be coated with chocolate, water ice, or other suitable coatings.

Unless otherwise specified, numerical ranges expressed in the format "from x to y" are understood to include x and y. In specifying any range of values or amounts, any particular upper value or amount can be associated with any particular lower value or amount. As used herein, the indefinite article "a" or "an" and its corresponding definite article "the" means at least one, or one or more, unless specified otherwise.

The various features of the present invention referred to in individual sections above apply, as appropriate, to other sections *mutatis mutandis.* Consequently, features specified in one section may be combined with features specified in other sections as appropriate. Any section headings are added for convenience only.

The following examples are intended to illustrate the invention and are not intended to limit the invention to those examples per se.

## EXAMPLES

In the examples that follow: Part A details how products were prepared and assessed in terms of their physical attributes (ability to form the correct emulsion, acceptable structural properties at serving temperatures); Part B details how products were prepared and how their organoleptic acceptability was assessed; and Part C details how the prior art fails to provide an acceptable oil-continuous frozen confection.

## MATERIALS

Unless otherwise stated, ingredients were sourced from the following suppliers:

OIL PHASE

| Material | Supplier (Location) |
|---|---|
| Sunflower Oil | Winterised Sunflower oil (Various) |
| Hemp Oil | Supermarket Brand (Hoogvliet, Netherlands) |
| Olive Oil | Supermarket Brand (Albert Heijn, Netherlands) |
| RPh70 (contained within structured oil called 'Phase Pro') | Unilever Food Solutions (Portugal) |
| Citrem (contained within structured oil called 'Phase Pro') | Unilever Food Solutions (Portugal) |
| PGPR 'polyglycerol polyrinoleate' | Danisco (UK) |
| Sucrose Ester S170 | Mitsubishi Chemical Foods Corporation (China) |
| Sucrose Ester S1170 'Ryoto' | Mitsubishi Chemical Foods Corporation (Japan) |
| Sucrose Ester DATEM 'Panodan SD/P K' | Danisco (UK) |
| Beakin Lecithin | Archer Daniels Midland (USA) |
| Yelkin Lecithin | Archer Daniels Midland (USA) |

WATER PHASE

| Material | Supplier (Location) |
|---|---|
| Sucrose | British Sugar (UK) |

(continued)

| Material | Supplier (Location) |
|---|---|
| Skimmed Milk Powder | Muller Milk (UK)/ Dairy Crest (UK) |
| Whey Protein Concentrate 'Textrion Progel 800' | Frieslandcampina (Netherlands) |
| Laponite RD (Magnesium Lithium Silicate) | BYK-Chemie GmbH (Germany) |
| Tapioca Starch 'Purity SUV' | Ingredion (USA) |
| Iota Carrageenan | Danisco (UK) |
| Soluble Fiber Promitor | Tate & Lyle (UK) |
| PGE215 | Dupont (UK) |
| Egg White Powder | Dr. Oetker (Germany) |

## METHODS

The emulsion of the present invention may be prepared in a number of ways, which is indicative of the versatility of the system. Various preparation methods were employed as indicated in the tables. The details of these preparation methods are as follows:

**Preparation Method A**

Water Phase - The dry powders were blended until well mixed, and then added to 80°C water and mixed for 10 minutes with a High Shear Mixer (Silverson L5M-A) operating at 10,000 RPM. The solution was then poured into a jacketed mixing vessel and heated above 90°C for 10 minutes to pasteurize. During this, a paddle mixer rotating at 50 RPM was used to ensure an even temperature distribution. The water phase was then cooled to 25°C prior to emulsification.

Oil Phase - The oil was added into a bowl alongside the emulsifier. The two materials were then blended together using a Kenwood kitchen mixer (Kenwood kMix KMX750RD) at 20°C, mixing at 'Speed 3' for 10 minutes using the balloon whisk attachment. The oil phase was then kept in the bowl for the emulsification step.

Emulsification - The water phase was gradually added to the oil phase within the Kenwood Mixer. This occurred within a 3 minute period during which the mixing was at 'Speed 3'. The emulsion was then continuously mixed for a further 7 minutes (10 minutes total mixing). The electrical conductivity was measured using a conductivity meter (HACH Pocket Conductivity HR) to assess whether the system was oil continuous (registering a measurement of 0-10 uS/cm). The emulsion was then portioned into 60g portions prior to quiescent freezing at -25°C.

**Preparation Method B**

Water Phase - The dry powders were blended until well mixed, and then added to water at 60°C and continuously mixed for 20 minutes using an overhead impeller (IKA RW20). The solution was then heated within a microwave (700W, full power) for 5 minutes to dissolve the starch. The water phase was then chilled overnight within a fridge at 5°C. The following day, the water phase was heated to 40-50°C prior to emulsification.

Oil Phase - The oil was added into a bowl alongside the emulsifier and the materials were blended together using a Kenwood kitchen mixer (Kenwood kMix KMX750RD) at 20°C, mixing at maximum speed (denoted 'Max' on the speed dial) with the balloon whisk attachment. The oil phase was then kept in the bowl for the emulsification step.

Emulsification - The water phase was gradually added to the oil phase within the Kenwood mixer bowl. The first quarter of the amount of water phase required was added under mixing speed of 'Speed 6'. Then, the mixing speed was reduced to 'Speed 3' for the remaining three quarters of the water phase. The full addition took approximately 12 minutes. The emulsion was then continuously mixed further for another 5 minutes whilst maintaining 'Speed 3'. The electrical conductivity was measured using a conductivity meter (HACH Pocket Conductivity HR) to assess whether the system was oil continuous (registering a measurement of 0-10 uS/cm). The emulsion was then portioned into 60g portions prior to quiescent freezing at either -18°C or -12°C.

**Preparation Method C**

Water Phase - The dry powders were blended until well mixed. Water at 20°C was added into a Thermomix vessel (Thermomix TM31, Vorwerk) and the stirrer was switched on to speed setting 2. The powders were gradually added to the water. Once dissolved, the speed setting was increased to 4. The solution was then heated to 90°C over a 15 minute period, and then maintained at 90°C for an additional 15 minutes. The water phase was transferred to a separate container where it was cooled to 40 - 50°C prior to emulsification.

Oil Phase - The oil was added into a bowl alongside the emulsifier and the materials were blended together using a Kenwood kitchen mixer (Kenwood kMix KMX750RD) at 20°C, mixing at maximum speed (denoted 'Max' on the speed dial) with the balloon whisk attachment. The oil phase was then kept in the bowl for the emulsification step. Emulsification - The water phase was gradually added to the oil phase within the Kenwood kitchen mixer (Kenwood kMix KMX750RD). The first quarter of the amount of water phase required was added under mixing speed of 'Speed 6'. The mixing speed was then reduced to 'Speed 3' for the remaining three quarters of the water phase. The full addition took approximately 12 minutes. The emulsion was then continuously mixed further for another 5 minutes whilst maintaining 'Speed 3'. The electrical conductivity was measured using a conductivity meter (HACH Pocket Conductivity HR) to assess whether the system was oil continuous (registering a measurement of 0-10 uS/cm). The emulsion was then portioned into 60g portions prior to quiescent freezing at either -18°C or -12°C (as specified in the tables below).

**Preparation Method D**

Water Phase - The dry powders (e.g. sugars, milk powders, viscosity modifiers etc.) were blended until well mixed. The powders were then added to 80°C water and mixed for 10 minutes with a High Shear Mixer (Silverson L5M-A). The solution was then poured into a jacketed mixing vessel and heated above 90°C for 10 minutes to pasteurize. During this, a paddle mixer rotating at 50 RPM was used to ensure an even temperature distribution. The water phase was then cooled to 5°C. Once cool, the waterphase was added to a Kenwood kitchen mixer (Kenwood kMix KMX750RD) bowl. The water phase was then mixed whilst held at 5°C for 30 minutes. The maximum mixing speed was used (denoted 'Max' on the speed dial) with the balloon whisk attachment to aerate the water phase to approximately 300% overrun. The water phase was then set aside.

Oil Phase - The oil was added into a bowl alongside the emulsifier and the materials were blended together using a Kenwood kitchen mixer (Kenwood kMix KMX750RD) at 20°C, mixing at maximum speed (denoted 'Max' on the speed dial). The oil phase was then kept in the bowl for the emulsification step.

Emulsification - The aerated water phase was gradually added to the oil phase within the Kenwood Mixer. The speed was set to 'Speed 2' with the balloon whisk attachment. The water phase was added slowly as 10 equal increments across a 15 minute time period. This allowed for emulsification of the water phase into the oil whilst also dispersing air within the system. The final overrun of the aerated system was approximately 50 to 65%. The electrical conductivity was measured to assess whether the system was oil continuous (0-10 uS/cm). The emulsion was then portioned into 60g portions prior to quiescent freezing at -25°C.

## PART A - PHYSICAL ASSESSMENTS

**Definition of Working Examples and Non-Working Examples**

Working examples met BOTH of the following criteria:

- When the water phase and oil phase were combined together, a water-in-oil emulsion was formed. This was demonstrated by performing an electrical conductivity measurement using a conductivity meter. Where a measurement of 0-10 mS/cm was obtained, the system was oil continuous; and
- When quiescently frozen and then provided at a serving temperature of either - 18°C (representative of developed market freezer temperatures) or -12°C (representative of emerging market freezer temperatures or of elevated, higher efficiency storage temperatures), the frozen confection was found by a trained experimenter to be the correct firmness for being scoopable/spoonable (i.e. able to be served as a frozen confection).

Conversely, an example was a non-working if:

- The emulsion formed was an oil-in-water emulsion. This was demonstrated by performing an electrical conductivity measurement using a conductivity meter. Where a measurement of greater than 10 mS/cm was obtained, the system was water continuous; and/or
- When quiescently frozen and served at -12°C (or colder), the frozen confection was found by a trained experimenter to be too hard to be scoopable/spoonable (i.e. not able to be served as a frozen confection) and therefore unacceptable.

In the examples that follow, the amounts of ingredients shown are weight percentages. For the Oil Phase Composition, the ingredients shown are weight percentages of the Oil Phase Composition. For the Water Phase Composition, the ingredients shown are weight percentages of the Water Phase Composition. For the Emulsion Composition, the ingredients shown are weight percentages of the Emulsion Composition. For the weight ratio of WP (water phase) to (OP) oil phase the proportions shown are weight proportions based on the weight in the final emulsion.

**EXAMPLE 1: effect of Water Phase (WP) : Oil Phase (OP) weight ratio**

| | | Working Examples | | | Non-Working |
|---|---|---|---|---|---|
| Example ID | | 1.A | 1.B | 1.C | 1.1 |
| Water Phase : Oil Phase | | 80% : 20% | 85% : 15% | 91.6% : 8.4% | 96% : 4% |
| Preparation Method | | A | B | B | A |
| **Oil Phase Composition** | Sunflower Oil | 91.11 | 93.93 | 93.62 | 91.11 |
| | RPh70 | 3.61 | 3.77 | 3.70 | 3.61 |
| | Citrem | 0.28 | 0.3 | 0.3 | 0.28 |
| | Emulsifier (PGPR) | 5.00 | 2.00 | 2.39 | 5.00 |
| | TOTAL | 100 | 100 | 100 | 100 |
| **Water Phase Composition** | Sucrose | 30 | 16.35 | 10.35 | 18.0 |
| | Skimmed Milk Powder | 2.50 | 2.47 | 1.54 | 2.50 |
| | Tapioca Starch | 2.70 | 2.71 | 0.85 | 2.70 |
| | Iota Carrageenan | 0.42 | 0.42 | 0.51 | 0.42 |
| | Water | 64.38 | 78.05 | 86.75 | 76.38 |
| | TOTAL | 100 | 100 | 100 | 100 |
| **Weight ratio of WP to OP** | Oil Phase | 20 | 15 | 8.4 | 4 |
| | Water Phase | 80 | 85 | 91.6 | 96 |
| | TOTAL | 100 | 100 | 100 | 100 |
| **Emulsion Composition** | Sunflower Oil | 18.22 | 14.10 | 7.86 | 3.64 |
| | RPh70 | 0.722 | 0.56 | 0.31 | 0.14 |
| | Citrem | 0.058 | 0.044 | 0.03 | 0.011 |
| | Emulsifier | 1.00 | 0.30 | 0.20 | 0.20 |
| | Sucrose | 24.0 | 13.9 | 9.48 | 17.28 |
| | Skimmed Milk Powder | 2.00 | 2.10 | 1.41 | 2.40 |
| | Tapioca Starch | 2.16 | 2.30 | 0.78 | 2.59 |
| | Iota Carrageenan | 0.34 | 0.36 | 0.47 | 0.40 |
| | Water | 51.5 | 66.34 | 79.46 | 73.32 |
| | TOTAL | 100 | 100 | 100 | 100 |
| **Emulsion property** | Type | W/O | W/O | W/O | O/W |
| | Conductivity (mS/cm) | 0.00 | 0.00 | 0.00 | 0.94 |

(continued)

| | | Working Examples | | | Non-Working |
|---|---|---|---|---|---|
| Example ID | | 1.A | 1.B | 1.C | 1.1 |
| Features of formulation | W/O Emulsion | YES | YES | YES | NO |
| | Scoopable at -12°C/-18°C | YES | YES | YES | n/a |

Examples 1.A, 1.B and 1.C which had a water phase to oil phase ratio in the range of from 94:6 to 70:30 formed water-in-oil emulsions that, upon quiescent freezing, had the appropriate physical properties as indicated by being scoopable at -12 and -18°C. In contrast, Example 1.1 which had a water phase to oil phase ratio of 96:4 did not form the required emulsion.

**EXAMPLE 2: effect of HLB of the emulsifier**

| | | Working Examples | | | |
|---|---|---|---|---|---|
| Example ID | | 2.A | 2.B | 2.C | 2.D |
| Emulsifier type (HLB) | | Sucrose Ester S170 (HLB = 1) | PGPR (HLB = 1.5) | Beakin Lecithin (HLB = 3) | Yelkin Lecithin (HLB = 4) |
| Preparation Method | | C | A | B | B |
| **Oil Phase Composition** | Sunflower Oil | 95.04 | 91.11 | 94.68 | 94.85 |
| | RPh70 | 3.77 | 3.61 | 3.75 | 3.75 |
| | Citrem | 0.30 | 0.28 | 0.30 | 0.30 |
| | Emulsifier | 0.89 | 5.00 | 1.27 | 1.10 |
| | TOTAL | 100 | 100 | 100 | 100 |
| **Water Phase Composition** | Sucrose | 10.22 | 30.00 | 8.96 | 8.95 |
| | Skimmed Milk Powder | 0.00 | 2.50 | 2.00 | 2.00 |
| | Tapioca Starch | 2.93 | 2.70 | 2.92 | 2.91 |
| | Iota Carrageenan | 0.45 | 0.42 | 0.45 | 0.45 |
| | Water | 86.4 | 64.38 | 85.67 | 85.69 |
| | TOTAL | 100 | 100 | 100 | 100 |
| **Weight ratio of WP to OP** | Oil Phase | 11.2 | 10 | 11 | 13.66 |
| | Water Phase | 88.8 | 90 | 89 | 86.34 |
| | TOTAL | 100 | 100 | 100 | 100 |

(continued)

| | | Working Examples | | | |
|---|---|---|---|---|---|
| Example ID | | **2.A** | **2.B** | **2.C** | **2.D** |
| **Emulsion Composition** | Sunflower Oil | 10.64 | 9.11 | 10.41 | 12.96 |
| | RPh70 | 0.42 | 0.36 | 0.41 | 0.51 |
| | Citrem | 0.03 | 0.03 | 0.03 | 0.04 |
| | Emulsifier | 0.10 | 0.50 | 0.14 | 0.15 |
| | Sucrose | 9.08 | 27 | 7.97 | 7.72 |
| | Skimmed Milk Powder | 0.00 | 2.25 | 1.78 | 1.72 |
| | Tapioca Starch | 2.60 | 2.43 | 2.60 | 2.51 |
| | Iota Carrageenan | 0.40 | 0.38 | 0.40 | 0.39 |
| | Water | 76.72 | 57.94 | 76.25 | 73.87 |
| | TOTAL | 100 | 100 | 100 | 100 |
| **Emulsion property** | Type | W/O | W/O | W/O | W/O |
| | Conductivity (mS/cm) | 0.00 | 0.00 | 0.00 | 0.00 |
| **Features of formulation** | W/O Emulsion | YES | YES | YES | YES |
| | Scoopable at -12°C/-18°C | YES | YES | YES | YES |

| | | Non-Working Examples | |
|---|---|---|---|
| Example ID | | **2.1** | **2.2** |
| Emulsifier type (HLB) | | Sucrose Ester S1170 (HLB = 11) | Sucrose Ester DATEM (HLB = 7) |
| Preparation Method | | C | C |
| **Oil Phase Composition** | Sunflower Oil | 96.88 | 93.88 |
| | RPh70 | 0.00 | 3.72 |
| | Citrem | 0.00 | 0.3 |
| | Emulsifier | 3.12 | 2.1 |
| | TOTAL | 100 | 100 |
| **Water Phase Composition** | Sucrose | 9.13 | 16.4 |
| | Skimmed Milk Powder | 0.00 | 2.4 |
| | Tapioca Starch | 2.97 | 2.7 |
| | Iota Carrageenan | 0.46 | 0.40 |
| | Water | 87.44 | 78.1 |
| | TOTAL | 100 | 100 |
| **Weight ratio of WP to OP** | Oil Phase | 21.5 | 15 |
| | Water Phase | 78.5 | 85 |
| | TOTAL | 100 | 100 |

(continued)

| | | Non-Working Examples | |
|---|---|---|---|
| Example ID | | 2.1 | 2.2 |
| Emulsion Composition | Sunflower Oil | 20.83 | 14.08 |
| | RPh70 | 0.00 | 0.56 |
| | Citrem | 0.00 | 0.05 |
| | Emulsifier | 0.67 | 0.32 |
| | Sucrose | 7.17 | 13.94 |
| | Skimmed Milk Powder | 0.00 | 2.04 |
| | Tapioca Starch | 2.33 | 2.30 |
| | Iota Carrageenan | 0.36 | 0.34 |
| | Water | 68.63 | 66.38 |
| | TOTAL | 100 | 100 |
| Emulsion property | Type | O/W | O/W |
| | Conductivity (mS/cm) | 0.44 | 0.11 |
| Features of formulation | W/O Emulsion | NO | NO |
| | Scoopable at -12°C/-18°C | n/a | n/a |

Examples 2.A, 2.B, 2.C & 2.D which contained emulsifiers with an HLB between 0.1 and 5 formed water-in-oil emulsions that, upon quiescent freezing, had the appropriate physical properties as indicated by being scoopable at -12 and -18°C. In contrast, Examples 2.1 & 2.2 which contained emulsifiers with an HLB greater than 5 did not form the required emulsion.

**EXAMPLE 3: effect of emulsifier concentration**

| | | Working Examples | | | |
|---|---|---|---|---|---|
| Example ID | | 3.A | 3.B | 3.C | 3.D |
| Emulsifier type and concentration (wt% oil phase) | | 0.07% PGPR | 0.33% PGPR | 2.39% PGPR | 0.83% Yelkin |
| Preparation Method | | A | A | B | A |
| Oil Phase Composition | Sunflower Oil | 95.84 | 95.58 | 93.62 | 95.1 |
| | RPh70 | 3.79 | 3.79 | 3.70 | 3.77 |
| | Citrem | 0.30 | 0.30 | 0.3 | 0.30 |
| | Emulsifier | 0.07 | 0.33 | 2.39 | 0.83 |
| | TOTAL | 100 | 100 | 100 | 100 |

(continued)

| | | Working Examples | | | |
|---|---|---|---|---|---|
| Example ID | | 3.A | 3.B | 3.C | 3.D |
| Water Phase Composition | Sucrose | 16.35 | 16.35 | 10.35 | 16.35 |
| | Skimmed Milk Powder | 2.47 | 2.47 | 1.54 | 2.47 |
| | Tapioca Starch | 2.71 | 2.71 | 0.85 | 2.71 |
| | Iota Carrageenan | 0.42 | 0.42 | 0.51 | 0.42 |
| | Water | 78.05 | 78.05 | 86.75 | 78.05 |
| | TOTAL | 100 | 100 | 100 | 100 |
| Weight ratio of WP to OP | Oil Phase | 15 | 15 | 8.38 | 12 |
| | Water Phase | 85 | 85 | 91.62 | 88 |
| | TOTAL | 100 | 100 | 100 | 100 |
| | A coefficient (E/W) | 0.00012 | 0.00059 | 0.00218 | 0.00114 |
| Emulsion Composition | Sunflower Oil | 14.38 | 14.34 | 7.85 | 11.41 |
| | RPh70 | 0.57 | 0.57 | 0.31 | 0.45 |
| | Citrem | 0.05 | 0.05 | 0.03 | 0.04 |
| | Emulsifier | 0.01 | 0.05 | 0.20 | 0.10 |
| | Sucrose | 13.9 | 13.9 | 9.48 | 14.39 |
| | Skimmed Milk Powder | 2.10 | 2.10 | 1.41 | 2.17 |
| | Tapioca Starch | 2.30 | 2.30 | 0.78 | 2.38 |
| | Iota Carrageenan | 0.36 | 0.36 | 0.47 | 0.37 |
| | Water | 66.34 | 66.34 | 79.48 | 68.68 |
| | TOTAL | 100 | 100 | 100 | 100 |
| Emulsion property | Type | W/O | W/O | W/O | W/O |
| | Conductivity (mS/cm) | 0.00 | 0.00 | 0.00 | 0.00 |
| Features of formulation | W/O Emulsion | YES | YES | YES | YES |
| | Scoopable at -12°C/-18°C | YES | YES | YES | YES |

Examples 3.A, 3.B, 3.C & 3.D formed a water-in-oil emulsion that, upon quiescent freezing, had the appropriate physical properties as indicated by being scoopable at -12 and -18°C. It can also be seen that for these examples the emulsion comprises at least (W × A) wt% emulsifier by weight of the emulsion where W is the proportion of the water phase in the emulsion expressed as the weight percentage of the total emulsion; and A is at least 0.0001.

**EXAMPLE 4: effect of the concentration of the oil in the oil phase**

| | Working Examples | | |
|---|---|---|---|
| Example ID | 4.A | 4.B | 4.C |
| Oil Composition | 91.1% Sunflower Oil | 94.8% Hemp Oil | 97.3% Sunflower Oil |
| Preparation Method | A | B | B |

(continued)

| | | Working Examples | | |
|---|---|---|---|---|
| Example ID | | 4.A | 4.B | 4.C |
| **Oil Phase Composition** | Oil | 91.11 | 94.84 | 97.30 |
| | RPh70 | 3.61 | 2.95 | 0.00 |
| | Citrem | 0.28 | 0.00 | 0.00 |
| | Emulsifier (PGPR) | 5.00 | 2.21 | 2.70 |
| | TOTAL | 100 | 100 | 100 |
| **Water Phase Composition** | Sucrose | 30 | 16.35 | 28.86 |
| | Skimmed Milk Powder | 2.50 | 2.44 | 0.74 |
| | Tapioca Starch | 2.70 | 2.66 | 1.18 |
| | Iota Carrageenan | 0.42 | 0.36 | 0.36 |
| | Water | 64.38 | 78.19 | 68.86 |
| | TOTAL | 100 | 100 | 100 |
| **Weight ratio of WP to OP** | Oil Phase | 20 | 14.93 | 14.07 |
| | Water Phase | 80 | 85.07 | 85.93 |
| | TOTAL | 100 | 100 | 100 |
| **Emulsion Composition detailed** | Oil | 18.22 | 14.15 | 13.69 |
| | RPh70 | 0.72 | 0.44 | 0.00 |
| | Citrem | 0.057 | 0.00 | 0.00 |
| | Emulsifier | 1 | 0.33 | 0.31 |
| | Sucrose | 24.0 | 13.9 | 24.8 |
| | Skimmed Milk Powder | 2.00 | 2.08 | 0.64 |
| | Tapioca Starch | 2.16 | 2.26 | 1.01 |
| | Iota Carrageenan | 0.34 | 0.31 | 0.20 |
| | Water | 51.5 | 66.52 | 59.17 |
| | TOTAL | 100 | 100 | 100 |
| **Emulsion property** | Type | W/O | W/O | W/O |
| | Conductivity (mS/cm) | 0.00 | 0.00 | 0.00 |
| **Features of formulation** | W/O Emulsion | YES | YES | YES |
| | Scoopable at -12°C -18°C | YES | YES | YES |

Examples 4.A, 4.B & 4.C in which the oil phase contained at least 91 wt% edible oil formed water-in-oil emulsions that, upon quiescent freezing, had the appropriate physical properties as indicated by being scoopable at -12 and -18°C.

**EXAMPLE 5**

The effect of the melting point of the oil relative to the melting point of the precursor water phase was assessed in the following examples. In the table below, the temperature at which the edible oil contains 25 wt% solid fat was determined using DSC as set out above, the temperature at which the water phase contains 25 wt% ice was determined by calculations according to the art.

| | | | Working Examples | | Non-Working |
|---|---|---|---|---|---|
| Example ID | | | 5.A | 5.B | 5.1 |
| Oil Type (melting point) | | | Sunflower Oil (-13°C) | Hemp Oil (-13°C) | Olive Oil (0°C) |
| Preparation Method | | | B | B | C |
| **Oil Phase Composition** | | Oil | 97.30 | 94.84 | 97.19 |
| | | RPh70 | 0.00 | 2.95 | 0.00 |
| | | Citrem | 0.00 | 0.00 | 0.00 |
| | | Emulsifier (PGPR) | 2.70 | 2.21 | 2.81 |
| | | TOTAL | 100 | 100 | 100 |
| **Water Phase Composition** | | Sucrose | 28.86 | 16.35 | 9.14 |
| | | Skimmed Milk Powder | 0.74 | 2.44 | 0.00 |
| | | Tapioca Starch | 1.18 | 2.66 | 2.97 |
| | | Iota Carrageenan | 0.36 | 0.36 | 0.45 |
| | | Water | 68.86 | 78.19 | 87.43 |
| | | TOTAL | 100 | 100 | 100 |
| **Weight ratio of WP to OP** | | Oil Phase | 14.07 | 14.93 | 14.25 |
| | | Water Phase | 85.93 | 85.07 | 85.75 |
| | | TOTAL | 100 | 100 | 100 |
| **Temperature at which the edible oil contains 25% solid fat** | | Oil | -13°C | -13°C | 0°C |
| **Temperature at which water phase contains 25% ice** | | Water Phase | -4.9°C | -2.4°C | -0.9°C |
| **Emulsion Composition detailed** | | Oil | 13.69 | 14.15 | 13.85 |
| | | RPh70 | 0.00 | 0.44 | 0.00 |
| | | Citrem | 0.00 | 0.00 | 0.00 |
| | | Emulsifier | 0.38 | 0.33 | 0.40 |
| | | Sucrose | 24.8 | 13.9 | 7.84 |
| | | Skimmed Milk Powder | 0.64 | 2.08 | 0.00 |
| | | Tapioca Starch | 1.01 | 2.26 | 2.55 |
| | | Iota Carrageenan | 0.20 | 0.31 | 0.39 |
| | | Water | 59.28 | 59.17 | 74.97 |
| | | TOTAL | 100 | 100 | 100 |
| **Emulsion property** | | Type | W/O | W/O | W/O |
| | | Conductivity (mS/cm) | 0.00 | 0.00 | 0.00 |
| **Features of formulation** | | W/O Emulsion | YES | YES | YES |
| | | Scoopable at -12°C/-18°C | YES | YES | NO |

Examples 5.A & 5.B for which the temperature at which the edible oil contained 25 wt% solid fat was lower than temperature at which the water phase contained 25 wt% ice formed water-in-oil emulsions that, upon quiescent freezing, had the appropriate physical properties (i.e. scoopable at -12 and -18°C). Example 5.1 used an edible oil (olive oil) which contained 25 wt% solid fat at a temperature higher than that at which the water phase contained 25 % ice. Although Example 5.1 initially formed a water-in-oil emulsion, upon quiescent freezing it did not have the appropriate physical properties.

**EXAMPLE 6: effect of the presence of a fat structurant in the oil phase**

| | | Working examples | |
|---|---|---|---|
| | | 6.A | 6.B |
| **Example ID** | | 6.A | 6.B |
| Fat Structurant | | 0% | 3.61% |
| Preparation Method | | B | A |
| **Oil Phase Composition** | Sunflower Oil | 97.30 | 91.11 |
| | RPh70 | 0.00 | 3.61 |
| | Citrem | 0.00 | 0.28 |
| | Emulsifier (PGPR) | 2.70 | 5.00 |
| | TOTAL | 100 | 100 |
| **Water Phase Composition** | Sucrose | 28.86 | 30.0 |
| | Skimmed Milk Powder | 0.74 | 2.50 |
| | Tapioca Starch | 1.18 | 2.70 |
| | Iota Carrageenan | 0.36 | 0.42 |
| | Water | 68.86 | 64.38 |
| | TOTAL | 100 | 100 |
| **Weight ratio of WP to OP** | Oil Phase | 14.07 | 20 |
| | Water Phase | 85.93 | 80 |
| | TOTAL | 100 | 100 |
| **Emulsion Composition** | Sunflower Oil | 13.69 | 18.22 |
| | RPh70 | 0.00 | 0.72 |
| | Citrem | 0.00 | 0.057 |
| | Emulsifier | 0.38 | 1 |
| | Sucrose | 24.8 | 24.0 |
| | Skimmed Milk Powder | 0.64 | 2.00 |
| | Tapioca Starch | 1.01 | 2.16 |
| | Iota Carrageenan | 0.31 | 0.34 |
| | Water | 59.17 | 51.5 |
| | TOTAL | 100 | 100 |
| **Emulsion property** | Type | W/O | W/O |
| | Conductivity (mS/cm) | 0.00 | 0.00 |
| **Features of formulation** | W/O Emulsion | YES | YES |
| | Scoopable at -12°C/-18°C | YES | YES |

Examples 6.A (no fat structurant) & 6.B (3.61 wt% of fat structurant, by weight of the oil phase) both formed water-in-oil emulsions that, upon quiescent freezing, had the appropriate physical properties as indicated by being scoopable at -12 and -18°C.

**EXAMPLE 7: effect of the amount of water in the water phase**

|  |  | Working examples | |
|---|---|---|---|
| Example ID | | 7.A | 7.B |
| Water wt% in Water Phase (by weight of water phases) | | 88.38 | 54.36 |
| Preparation Method | | A | A |
| **Oil Phase Composition** | Sunflower Oil | 91.11 | 91.11 |
| | RPh70 | 3.61 | 3.61 |
| | Citrem | 0.28 | 0.28 |
| | Emulsifier (PGPR) | 5.00 | 5.00 |
| | TOTAL | 100 | 100 |
| **Water Phase Composition** | Sucrose | 6.00 | 40.0 |
| | Skimmed Milk Powder | 2.50 | 2.51 |
| | Tapioca Starch | 2.70 | 2.71 |
| | Iota Carrageenan | 0.42 | 0.42 |
| | Water | 88.38 | 54.36 |
| | TOTAL | 100 | 100 |
| **Weight ratio of WP to OP** | Oil Phase | 20 | 15 |
| | Water Phase | 80 | 85 |
| | TOTAL | 100 | 100 |
| **Emulsion Composition detailed** | Sunflower Oil | 18.22 | 13.66 |
| | RPh70 | 0.72 | 0.54 |
| | Citrem | 0.06 | 0.042 |
| | Emulsifier | 1.00 | 0.75 |
| | Sucrose | 4.8 | 34.0 |
| | Skimmed Milk Powder | 2.00 | 2.13 |
| | Tapioca Starch | 2.16 | 2.30 |
| | Iota Carrageenan | 0.34 | 0.36 |
| | Water | 70.7 | 46.21 |
| | TOTAL | 100 | 100 |
| **Emulsion property** | Type | W/O | W/O |
| | Conductivity (mS/cm) | 0.00 | 0.00 |
| **Features of formulation** | W/O Emulsion | YES | YES |
| | Scoopable at -12°C/-18°C | YES | YES |

Examples 7.A & 7.B which contained between 45 to 96 wt% water (by weight of the precursor water phase) formed water-in-oil emulsions that, upon quiescent freezing, had the appropriate physical properties as indicated by being scoopable at -12 and -18°C.

**EXAMPLE 8: effect of the amount of freezing point depressors**

| | | | Working Examples | | | |
|---|---|---|---|---|---|---|
| | | | **8.A** | **8.B** | **8.C** | **8.D** |
| Example ID | | | 8.A | 8.B | 8.C | 8.D |
| wt% Freezing Point Depressors (Sucrose) | | | 6% | 16.4% | 30% | 40% |
| Preparation Method | | | A | B | A | A |
| **Oil Phase Composition** | | Sunflower Oil | 91.11 | 95.58 | 91.11 | 91.11 |
| | | RPh70 | 3.61 | 3.79 | 3.61 | 3.61 |
| | | Citrem | 0.28 | 0.30 | 0.28 | 0.28 |
| | | Emulsifier | 5.00 | 0.33 | 5.00 | 5.00 |
| | | TOTAL | 100 | 100 | 100 | 100 |
| **Water Phase Composition** | | Sucrose | 6.00 | 16.35 | 30.0 | 40.0 |
| | | Skimmed Milk Powder | 2.50 | 2.47 | 2.50 | 2.51 |
| | | Tapioca Starch | 2.70 | 2.71 | 2.70 | 2.71 |
| | | Iota Carrageenan | 0.42 | 0.42 | 0.42 | 0.42 |
| | | Water | 88.38 | 78.05 | 64.38 | 54.36 |
| | | TOTAL | 100 | 100 | 100 | 100 |
| **Weight ratio of WP to OP** | | Oil Phase | 20 | 15 | 20 | 15 |
| | | Water Phase | 80 | 85 | 80 | 85 |
| | | TOTAL | 100 | 100 | 100 | 100 |
| **Emulsion Composition** | | Sunflower Oil | 18.22 | 14.34 | 18.22 | 13.66 |
| | | RPh70 | 0.76 | 0.57 | 0.72 | 0.54 |
| | | Citrem | 0.06 | 0.045 | 0.06 | 0.042 |
| | | Emulsifier | 1.00 | 0.05 | 1.00 | 0.75 |
| | | Sucrose | 4.8 | 13.9 | 24.0 | 34.0 |
| | | Skimmed Milk Powder | 2.00 | 2.10 | 2.00 | 2.13 |
| | | Tapioca Starch | 2.16 | 2.30 | 2.16 | 2.30 |
| | | Iota Carrageenan | 0.34 | 0.36 | 0.34 | 0.36 |
| | | Water | 70.7 | 66.34 | 51.5 | 46.21 |
| | | TOTAL | 100 | 100 | 100 | 100 |
| **Emulsion property** | | Type | W/O | W/O | W/O | W/O |
| | | Conductivity (mS/cm) | 0.00 | 0.00 | 0.00 | 0.00 |
| **Features of formulation** | | W/O Emulsion | YES | YES | YES | YES |
| | | Scoopable at -12°C/-18°C | YES | YES | YES | YES |

| | | | Non-working Examples | |
|---|---|---|---|---|
| **Example ID** | | | 8.1 | 8.2 |
| wt% Freezing Point Depressors (Sucrose) | | | 2% | 2.47% |
| Preparation Method | | | A | B |
| **Oil Phase Composition** | | Sunflower Oil | 91.11 | 97.16 |
| | | RPh70 | 3.61 | 0.00 |
| | | Citrem | 0.28 | 0.00 |
| | | Emulsifier (PGPR) | 5.00 | 2.84 |
| | | TOTAL | 100 | 100 |
| **Water Phase Composition** | | Sucrose | 2.00 | 2.47 |
| | | Skimmed Milk Powder | 1.02 | 2.51 |
| | | Tapioca Starch | 1.61 | 2.71 |
| | | Iota Carrageenan | 0.31 | 0.42 |
| | | Water | 95.06 | 91.89 |
| | | TOTAL | 100 | 100 |
| **Weight ratio of WP to OP** | | Oil Phase | 15 | 14.09 |
| | | Water Phase | 85 | 85.91 |
| | | TOTAL | 100 | 100 |
| **Emulsion Composition** | | Sunflower Oil | 13.67 | 13.69 |
| | | RPh70 | 0.54 | 0.00 |
| | | Citrem | 0.043 | 0.00 |
| | | Emulsifier | 0.75 | 0.40 |
| | | Sucrose | 1.70 | 2.12 |
| | | Skimmed Milk Powder | 0.87 | 2.16 |
| | | Tapioca Starch | 1.37 | 2.33 |
| | | Iota Carrageenan | 0.26 | 0.36 |
| | | Water | 80.8 | 78.94 |
| | | TOTAL | 100 | 100 |
| **Emulsion property** | | Type | W/O | W/O |
| | | Conductivity (mS/cm) | 0.00 | 0.00 |
| **Features of formulation** | | W/O Emulsion | YES | YES |
| | | Scoopable at -12°C/-18°C | NO | NO |

Examples 8.A, 8.B, 8.C & 8.D contained from 2.5 to 40 wt% sucrose (by weight of the emulsion) and formed water-in-oil emulsions that, upon quiescent freezing, had the appropriate physical properties as indicated by being scoopable at -12 and -18°C. Conversely, although Examples 8.1 & 8.2 formed a water-in-oil emulsion, upon quiescent freezing they did not have the appropriate physical properties.

**EXAMPLE 9: effect of the presence of structuring agent in the water phase**

| | | Working example |
|---|---|---|
| **Example ID** | | 9.A |
| | Structuring Agents | 1.36% Tapioca Starch + 0.21% Iota Carrageenan |
| | Preparation Method | C |
| **Oil Phase Composition** | Sunflower Oil | 97.7 |
| | RPh70 | 0.00 |
| | Citrem | 0.00 |
| | Emulsifier (PGPR) | 2.30 |
| | TOTAL | 100 |
| **Water Phase Composition** | Sucrose | 8.20 |
| | Skimmed Milk Powder | 1.24 |
| | Tapioca Starch | 1.36 |
| | Iota Carrageenan | 0.21 |
| | Water | 88.99 |
| | TOTAL | 100 |
| **Weight ratio of WP to OP** | Oil Phase | 15.25 |
| | Water Phase | 84.75 |
| | TOTAL | 100 |
| **Emulsion Composition** | Sunflower Oil | 14.90 |
| | RPh70 | 0.00 |
| | Citrem | 0.00 |
| | Emulsifier | 0.35 |
| | Sucrose | 6.95 |
| | Skimmed Milk Powder | 1.05 |
| | Tapioca Starch | 1.15 |
| | Iota Carrageenan | 0.18 |
| | Water | 75.42 |
| | TOTAL | 100 |
| **Emulsion property** | Type | W/O |
| | Conductivity (mS/cm) | 0.00 |
| **Features of formulation** | W/O Emulsion | YES |
| | Scoopable at -12°C/-18°C | YES |

Example 9.A (1.36 wt% Tapioca Starch + 0.21 wt% Iota Carrageenan) formed a water-in-oil emulsion and upon quiescent freezing had the appropriate physical properties as indicated by being scoopable at -12 and -18°C.

**EXAMPLE 10: effect of the presence of nucleators in the water phase**

| | | Working Examples | | | |
|---|---|---|---|---|---|
| **Example ID** | | **10.A** | **10.B** | **10.C** | **10.D** |
| Nucleators (wt% by weight of water phase) | | No Nucleator | 0.94% Laponite | 2.5% Skimmed Milk Powder | 8.24% Whey Protein Concentrate |
| Preparation Method | | | B | A | C |
| **Oil Phase Composition** | Sunflower Oil | 95.04 | 89.5 | 91.11 | 93.67 |
| | RPh70 | 3.77 | 3.55 | 3.61 | 3.71 |
| | Citrem | 0.30 | 0.28 | 0.28 | 0.29 |
| | Emulsifier | 0.89 | 6.67 | 5.00 | 2.33 |
| | TOTAL | 100 | 100 | 100 | 100 |
| **Water Phase Composition** | Sucrose | 10.22 | 9.06 | 6.00 | 8.83 |
| | Nucleator | 0.00 | 0.94 (Laponite) | 2.50 (SMP) | 8.24 (WPC) |
| | Sol. Fiber Promitor | 0.00 | 0.00 | 0.00 | 3.53 |
| | Tapioca Starch | 2.93 | 2.94 | 2.70 | 2.71 |
| | Iota Carrageenan | 0.45 | 0.35 | 0.42 | 0.35 |
| | Water | 86.4 | 86.71 | 88.38 | 76.34 |
| | TOTAL | 100 | 100 | 100 | 100 |
| **Weight ratio of WP to OP** | Oil Phase | 11.2 | 15 | 20 | 15.05 |
| | Water Phase | 88.8 | 85 | 80 | 84.95 |
| | TOTAL | 100 | 100 | 100 | 100 |
| **Emulsion Composition** | Sunflower Oil | 10.64 | 13.43 | 18.22 | 14.10 |
| | RPh70 | 0.42 | 0.53 | 0.72 | 0.56 |
| | Citrem | 0.03 | 0.042 | 0.06 | 0.044 |
| | Emulsifier | 0.10 | 1.00 | 1.00 | 0.35 |
| | Sucrose | 9.08 | 7.70 | 4.80 | 7.5 |
| | Nucleator | 0.00 | 0.80 (Laponite) | 2.00 (SMP) | 7.00 (WPC) |
| | Sol. Fiber Promitor | 0.00 | 0.00 | 0.00 | 3.00 |
| | Tapioca Starch | 2.60 | 2.50 | 2.16 | 2.30 |
| | Iota Carrageenan | 0.40 | 0.30 | 0.34 | 0.30 |
| | Water | 76.72 | 73.7 | 70.7 | 64.85 |
| | TOTAL | 100 | 100 | 100 | 100 |
| **Emulsion property** | Type | W/O | W/O | W/O | W/O |
| | Conductivity (mS/cm) | 0.00 | 0.00 | 0.00 | 0.00 |
| **Features of formulation** | W/O Emulsion | YES | YES | YES | YES |
| | Scoopable at -12°C/-18°C | YES | YES | YES | YES |

|  | Non-Working Example |
|---|---|
| **Example ID** | **10.1** |
| Nucleators (wt% by weight of water phase) | 20.64% Skimmed Milk Powder |
| Preparation Method | C |
| **Oil Phase Composition** Sunflower Oil | 92.62 |
| Lemon Oil | 1.31 |
| RPh70 | 3.67 |
| Citrem | 0.29 |
| Emulsifier (PGPR) | 2.10 |
| TOTAL | 100 |
| **Water Phase Composition** Sucrose | 0.00 |
| Nucleator (SMP) | 20.62 |
| Tapioca Starch | 4.07 |
| Iota Carrageenan | 0.64 |
| Water | 74.67 |
| TOTAL | 100 |
| **Weight ratio of WP to OP** Oil Phase | 15.22 |
| Water Phase | 84.78 |
| TOTAL | 100 |
| **Emulsion Composition** Sunflower Oil | 14.10 |
| Lemon Oil | 0.20 |
| RPh70 | 0.56 |
| Citrem | 0.044 |
| Emulsifier | 0.32 |
| Sucrose | 0.00 |
| Skimmed Milk Powder | 17.48 |
| Tapioca Starch | 3.45 |
| Iota Carrageenan | 0.54 |
| Water | 63.31 |
| TOTAL | 100 |
| **Emulsion property** Type | W/O |
| Conductivity (mS/cm) | 0.00 |
| **Features of formulation** W/O Emulsion | YES |
| Further Issues | Poor texture |

Examples 10.A, 10.B, 10.C & 10.D formed a water-in-oil emulsion that, upon quiescent freezing, had the appropriate physical properties (scoopable at -12 and -18°C). Although example 10.1 also formed a water-in-oil emulsion, it did not have the required texture due to the high levels of nucleator. Therefore, although the presence of a nucleator is optional, when present they should be at most 10 wt% by weight of the emulsion.

**EXAMPLE 11: effect of aeration and the presence of an air stabiliser**

| | | Working examples | | |
|---|---|---|---|---|
| Example ID | | 11.A | 11.B | 11.C |
| Air stabiliser | | None | PGE215 | Egg White Powder |
| Preparation Method | | D | D | D |
| **Oil Phase Composition** | Sunflower Oil | 92.29 | 92.29 | 92.29 |
| | RPh70 | 3.66 | 3.66 | 3.66 |
| | Citrem | 0.29 | 0.29 | 0.29 |
| | Emulsifier (PGPR) | 3.76 | 3.76 | 3.76 |
| | TOTAL | 100 | 100 | 100 |
| **Water Phase Composition** | Sucrose | 22.89 | 22.89 | 22.89 |
| | Skimmed Milk Powder | 2.53 | 2.53 | 2.53 |
| | Air stabiliser | 0.00 | 0.24 (PGE215) | 1.20 (Egg White Powder) |
| | Tapioca Starch | 2.77 | 2.77 | 2.77 |
| | Iota Carrageenan | 0.43 | 0.43 | 0.43 |
| | Water | 71.38 | 71.14 | 70.18 |
| | TOTAL | 100 | 100 | 100 |
| **Water Phase Overrun** | Overrun (%) | 310 | 303 | 344 |
| **Weight ratio of WP to OP** | Oil Phase | 17 | 17 | 17 |
| | Water Phase | 83 | 83 | 83 |
| | TOTAL | 100 | 100 | 100 |
| **Emulsion Composition** | Sunflower Oil | 15.69 | 15.69 | 15.69 |
| | RPh70 | 0.62 | 0.62 | 0.62 |
| | Citrem | 0.049 | 0.049 | 0.049 |
| | Emulsifier | 0.64 | 0.64 | 0.64 |
| | Sucrose | 19.0 | 19.0 | 19.0 |
| | Skimmed Milk Powder | 2.10 | 2.10 | 2.10 |
| | Air stabiliser | 0.00 | 0.20 (PGE215) | 1.00 (Egg White Powder) |
| | Tapioca Starch | 2.30 | 2.30 | 2.30 |
| | Iota Carrageenan | 0.36 | 0.36 | 0.36 |
| | Water | 59.25 | 59.04 | 58.24 |
| | TOTAL | 100 | 100 | 100 |
| **Emulsion property** | Type | W/O | W/O | W/O |
| | Conductivity (mS/cm) | 0.00 | 0.00 | 0.00 |
| **Emulsion Overrun** | Overrun (%) | 55 | 62 | 59 |
| **Features of formulation** | W/O Emulsion | YES | YES | YES |
| | Scoopable at -12°C/-18°C | YES | YES | YES |

Examples 11.A, 11.B & 11.C formed an aerated water-in-oil emulsion that, upon quiescent freezing, had the appropriate physical properties as indicated by being scoopable at -12 and - 18°C thus demonstrating that aerated systems perform well either with or without the presence of an air stabiliser.

## PART B - ORGANOLEPTIC ASSESSMENT

In the following examples, half of the samples were subjected to a temperature abuse cycle representative of in-market quality of the product after transportation and retail. Temperature abuse was a cycle of -18°C for 1 hour followed by -6°C for 4 hours, repeated across a 75 hour time period (15 cycles, using programmable environmental test chamber: Manufacturer ACS, Model DY340). Samples sizes were 60g portions. This approach allowed indirect assessment of microstructural stability through sensory analysis with the ideal scenario being minimal/no detectable difference in textural properties when comparing temperature abused samples to non-abused samples.

Following the abuse cycle, samples were held for at least 24 hours at either -18°C or - 12°C before consumption. A structured team assessment was conducted in which 8-10 participants compared textual properties (firmness to spoon, hardness, iciness) of pairs of samples before and after temperature abuse. Samples were randomly coded, participants were blinded to the formulation and to whether the sample had been thermally abused or not. Participants were also asked whether the samples would be considered 'acceptable' as a product proposition.

### EXAMPLE 12 - Non-aerated examples

|  |  | Working examples | | | | |
|---|---|---|---|---|---|---|
| Example ID | | 12.A | 12.B | 12.C | 12.D | 12.E |
| Preparation Method | | A | A | A | A | A |
| **Oil Phase Composition** | Sunflower Oil | 91.11 | 91.11 | 91.11 | 91.11 | 91.11 |
|  | RPh70 | 3.61 | 3.61 | 3.61 | 3.61 | 3.61 |
|  | Citrem | 0.28 | 0.28 | 0.28 | 0.28 | 0.28 |
|  | PGPR | 5.00 | 5.00 | 5.00 | 5.00 | 5.00 |
|  | TOTAL | 100 | 100 | 100 | 100 | 100 |
| **Water Phase Composition** | Sucrose | 6.00 | 30.00 | 18.00 | 6.00 | 30.00 |
|  | Skimmed Milk Powder | 2.50 | 2.50 | 2.51 | 2.50 | 2.50 |
|  | Tapioca Starch | 2.70 | 2.70 | 2.71 | 2.70 | 2.70 |
|  | Iota Carrageenan | 0.42 | 0.42 | 0.42 | 0.42 | 0.42 |
|  | Water | 88.38 | 64.38 | 76.36 | 88.38 | 64.38 |
|  | TOTAL | 100 | 100 | 100 | 100 | 100 |
| **Weight ratio of WP to OP** | Oil Phase | 10 | 10 | 15 | 20 | 20 |
|  | Water Phase | 90 | 90 | 85 | 80 | 80 |
|  | TOTAL | 100 | 100 | 100 | 100 | 100 |

(continued)

| | | Working examples | | | | |
|---|---|---|---|---|---|---|
| Example ID | | 12.A | 12.B | 12.C | 12.D | 12.E |
| Preparation Method | | A | A | A | A | A |
| **Emulsion Composition** | Sunflower Oil | 9.11 | 9.11 | 13.67 | 18.22 | 18.22 |
| | RPh70 | 0.36 | 0.36 | 0.54 | 0.72 | 0.72 |
| | Citrem | 0.029 | 0.029 | 0.043 | 0.057 | 0.057 |
| | PGPR | 0.50 | 0.50 | 0.75 | 1.00 | 1.00 |
| | Sucrose | 5.40 | 27.0 | 15.3 | 4.80 | 24.0 |
| | Skimmed Milk Powder | 2.25 | 2.25 | 2.13 | 2.00 | 2.00 |
| | Tapioca Starch | 2.43 | 2.43 | 2.30 | 2.16 | 2.16 |
| | Iota Carrageenan | 0.38 | 0.38 | 0.36 | 0.34 | 0.34 |
| | Water | 79.54 | 57.94 | 64.91 | 70.70 | 51.50 |
| | TOTAL | 100 | 100 | 100 | 100 | 100 |
| **Emulsion property** | Type | W/O | W/O | W/O | W/O | W/O |
| | Conductivity (mS/cm) | 0.00 | 0.00 | 0.00 | 0.00 | 0.00 |
| **Ice Content when Frozen, % (Calculated)** | At -12°C | 74.9 | 38.9 | 53.7 | 66.6 | 34.6 |
| | At -18°C | 76.0 | 43.4 | 56.4 | 67.6 | 38.6 |
| **Features of formulation** | W/O Emulsion | YES | YES | YES | YES | YES |
| | Scoopable at -12°C/-18°C | YES | YES | YES | YES | YES |

Example 12.A was very stable with no alteration in structure following abuse and was considered acceptable by participants when served at -12°C.

Example 12.B was stable with some limited softening in texture which was not considered to be detrimental by participants. Products were considered smooth and 87.5% of participants considered the sample acceptable when served at -18°C.

Example 12.C was stable and surprisingly had reduction in iciness following temperature abuse. Samples were considered acceptable by participants when served at -12°C.

Example 12.D was very stable with no significant alteration in structure and was considered acceptable by participants when served at -12°C.

Example 12.E was stable with some limited but acceptable softening in texture after abuse and all of participants found the sample acceptable at -18°C.

| | | Working examples | | Non-working examples | |
|---|---|---|---|---|---|
| Example ID | | 12.F | 12.G | 12.1 | 12.2 |
| Preparation Method | | A | A | A | A |
| **Oil Phase Composition** | Sunflower Oil | 91.11 | 91.11 | 91.11 | 91.11 |
| | RPh70 | 3.61 | 3.61 | 3.61 | 3.61 |
| | Citrem | 0.28 | 0.28 | 0.28 | 0.28 |
| | PGPR | 5.00 | 5.00 | 5.00 | 5.00 |
| | TOTAL | 100 | 100 | 100 | 100 |

(continued)

| | | Working examples | | Non-working examples | |
|---|---|---|---|---|---|
| **Example ID** | | 12.F | 12.G | 12.1 | 12.2 |
| Preparation Method | | A | A | A | A |
| **Water Phase Composition** | Sucrose | 18.00 | 40.00 | 18.00 | 2.00 |
| | Skimmed Milk Powder | 2.50 | 2.50 | 2.50 | 2.50 |
| | Tapioca Starch | 2.70 | 2.70 | 2.70 | 2.70 |
| | Iota Carrageenan | 0.42 | 0.42 | 0.42 | 0.42 |
| | Water | 76.39 | 54.36 | 76.39 | 92.36 |
| | TOTAL | 100 | 100 | 100 | 100 |
| **Weight ratio of WP to OP** | Oil Phase | 25.00 | 15.00 | 4.00 | 15.00 |
| | Water Phase | 75.00 | 85.00 | 96.00 | 85.00 |
| | TOTAL | 100 | 100 | 100 | 100 |
| **Emulsion Composition** | Sunflower Oil | 22.78 | 13.67 | 3.61 | 13.67 |
| | RPh70 | 0.90 | 0.54 | 0.14 | 0.54 |
| | Citrem | 0.071 | 0.043 | 0.011 | 0.043 |
| | PGPR | 1.25 | 0.75 | 0.20 | 0.75 |
| | Sucrose | 13.50 | 34.0 | 17.28 | 1.70 |
| | Skimmed Milk Powder | 1.88 | 2.13 | 2.40 | 2.13 |
| | Tapioca Starch | 2.03 | 2.30 | 2.59 | 2.30 |
| | Iota Carrageenan | 0.32 | 0.36 | 0.40 | 0.36 |
| | Water | 57.27 | 46.21 | 73.33 | 78.51 |
| | TOTAL | 100 | 100 | 100 | 100 |
| **Emulsion property** | Type | W/O | W/O | O/W | W/O |
| | Conductivity (mS/cm) | 0.00 | 0.00 | 0.94 | 0.00 |
| **Ice Content when Frozen, % (Calculated)** | At -12°C | 47.4 | 22.6 | - | 76.4 |
| | At -18°C | 49.7 | 28.2 | - | 76.9 |
| **Features of formulation** | W/O Emulsion | YES | YES | NO | YES |
| | Scoopable at -12°C/-18°C | YES | YES | n/a | NO |

Example 12.F was stable with some limited but acceptable softening in texture after abuse. Although high in oil (75wt% Oil Phase : 25wt% Water Phase), the majority of participants considered the sample to be acceptable.

Example 12.G was stable with only very minor changes in texture attributes following abuse. Although softer and sweeter due to the high sucrose content, all participants found the structure to be acceptable.

Example 12.1 had a weight ratio of water phase to oil phase of 96:4 and phase inverted to a water continuous system, registering conductivity (0.94 mS/cm). In view of this failure, the example was not subjected to further analysis.

Example 12.2 contained less than 4 wt% (by weight of the emulsion) of freezing point depressors. Although the samples were stable with no alteration in structure following abuse, all participants found the sample to be unacceptably hard and impossible to apportion when served at either -18°C or -12°C.

**EXAMPLE 13 - Aerated examples**

| | | Working examples | | |
|---|---|---|---|---|
| **Example ID** | | 13.A | 13.B | 13.C |
| Preparation Method | | D | D | D |
| **Oil Phase Composition** | Sunflower Oil | 92.29 | 92.29 | 92.29 |
| | RPh70 | 3.66 | 3.66 | 3.66 |
| | Citrem | 0.29 | 0.29 | 0.29 |
| | PGPR | 3.76 | 3.76 | 3.76 |
| | TOTAL | 100 | 100 | 100 |
| **Water Phase Composition** | Sucrose | 22.89 | 22.89 | 22.89 |
| | Skimmed Milk Powder | 2.53 | 2.53 | 2.53 |
| | Air stabiliser | 0.00 | 0.24 (PGE215) | 1.20 (Egg White Powder) |
| | Tapioca Starch | 2.77 | 2.77 | 2.77 |
| | Iota Carrageenan | 0.43 | 0.43 | 0.43 |
| | Water | 71.37 | 71.14 | 70.18 |
| | TOTAL | 100 | 100 | 100 |
| **Water Phase Overrun (%)** | | 310 | 303 | 344 |
| **Weight ratio of WP to OP** | Oil Phase | 17 | 17 | 17 |
| | Water Phase | 83 | 83 | 83 |
| | TOTAL | 100 | 100 | 100 |
| **Emulsion Composition** | Sunflower Oil | 15.69 | 15.69 | 15.69 |
| | RPh70 | 0.62 | 0.62 | 0.62 |
| | Citrem | 0.049 | 0.049 | 0.049 |
| | PGPR | 0.64 | 0.64 | 0.64 |
| | Sucrose | 19.0 | 19.0 | 19.0 |
| | Skimmed Milk Powder | 2.10 | 2.10 | 2.10 |
| | Air stabilising Emulsifier | 0.00 | 0.20 (PGE215) | 1.00 (Egg White Powder) |
| | Tapioca Starch | 2.30 | 2.30 | 2.30 |
| | Iota Carrageenan | 0.36 | 0.36 | 0.36 |
| | Water | 59.24 | 59.04 | 58.24 |
| | TOTAL | 100 | 100 | 100 |
| **Emulsion property** | Type | W/O | W/O | W/O |
| | Conductivity (mS/cm) | 0.00 | 0.00 | 0.00 |
| **Emulsion Overrun** | Overrun (%) | 55 | 62 | 59 |
| **Ice Content when Frozen, % (Calculated)** | At -12°C | 45.6 | 45.4 | 44.6 |
| | At -18°C | 48.9 | 48.6 | 47.5 |

(continued)

| Example ID | | Working examples | | |
|---|---|---|---|---|
| | | 13.A | 13.B | 13.C |
| Preparation Method | | D | D | D |
| Features of formulation | W/O Emulsion | YES | YES | YES |
| | Scoopable at -12°C/-18°C | YES | YES | YES |

The examples were aerated with or without an additional air stabiliser and were all found to provide a softer and lighter sensorial experience vs. an unaerated system.

Example 13.A was very stable with no alteration in structure after abuse. Products were soft and smooth and all of participants considered the products to be acceptable at - 18°C.

Example 13.B experienced some alteration in structure upon temperature abuse becoming slightly harder, but products had acceptable firmness in both cases. All participants considered the sample to be acceptable at -18°C.

Example 13.C was stable with some softening of texture upon temperature abuse and a slightly crumbly but acceptable consistency. 90% of participants considered the sample to be acceptable at -18°C.

**PART C** - **ASSESSMENT OF PRIOR ART DOCUMENT** JP64063341

In example 1 of JP64063341 an amount of diacylglycerol was prepared containing 100g diacylglycerides as oil/emulsifier and mixed with 500 g water phase containing 20 wt% sucrose in water to obtain a w/o emulsion that was frozen to a frozen desert. Example 1 from JP64063341 was repeated using a diacylglyceride (DAG), Econa oil, as oil. The instructions of example 1 of JP64063341 were implemented as follows.

MATERIALS

**Econa oil:** containing 80 wt% diacylglycerides and 20 wt% triacylglycerides (Kao, Tokyo, Japan); oil composition:

- 57% Poly-unsaturated fatty acids,
- 36% Mono-unsaturated fatty acids,
- 7% Saturated fatty acids.

**Sucrose:** Fine crystalline solid sugar.

**Water:** lab demiwater.

FORMULATION

125 g Econa oil
100 g sucrose
400 g demiwater

METHOD ACCORDING TO JP64063341:

A commercially available lipase preparation (manufactured by Novo Industry AS) (10 g), 100 g of rapeseed oil and 10 g of glycerol were mixed, then mixed with 100 g of rapeseed oil and 10 g of glycerol (containing 0.8% of water) together with stirring at 80°C and the resulting mixture was made to react for 15 hours by stirring at 80°C. The glyceride composition in the reaction product was as shown in the following table.

| Triglyceride | Diglyceride | Monoglyceride |
|---|---|---|
| 11.2% by weight | 60.0% by weight | 28.8% by weight |

A 20% aqueous solution (500 g) of sucrose was added to 100 g of the glycerol dirapeseed oil fatty acid ester produced in Manufacturing Example 1 followed by stirring for 5 minutes using a whipping device in an attempt to prepare a water-in-oil emulsion. The resulting emulsion was immediately stored in a freezer of -20°C for 12 hours to give a water-in-oil frozen dessert.

This process resulted in poor emulsification: a two phase product with a foam and a transparent "emulsion" phase was obtained. The conductivity measurement varied between zero and low, but this measurement difficulty was due an oily coating on the sensor contact caused by the two phase product obtained. When frozen, the product was unacceptably and was inedible. This demonstrates that the teaching of JP64063341 does not provide an acceptable frozen confection.

Subsequent experiments were performed using the same formulation but an alternative process in which the water phase was added slowly in small steps.

FURTHER METHOD USED TO REPLICATE JP64063341

50g Sucrose was dissolved at room temperature in 200 ml demi water to obtain the water phase. The 250g water phase was added to 62.5g Econa oil (containing 80 wt%, e.g. 50g DAGs). The content was stirred for 5 min with a whipping device (Kenwood balloon whisk) in a Kenwood Chef Major (induction assisted heater/mixer) at speed 6 to prepare a w/o emulsion at room temperature.

The emulsion was stored immediately in small 35 ml samples in plastic cups in a Weiss SB22 climate chamber operating as a blast freezer to obtain a -18 C frozen desert.

The result was a white water-in-oil emulsion product of zero conductivity with 20% oil phase. The product was oil continuous and stable over 3 days. However, when this product was quiescently frozen it resulted in a hard product that could not be scooped at -18 C. Also, when this version of the product was consumed by a trained panel the taste was found to be unacceptable for a frozen confection (fishy).

**Claims**

1. A water-in-oil emulsion for the preparation of a frozen confection, the emulsion comprising a water phase (WP) and an oil phase (OP) in a weight ratio (WP:OP) of from 94:6 to 70:30 wherein:

   - the oil phase comprises at least an edible oil and an emulsifier, the emulsifier having an average HLB of from 0.1 to 5;
   - the water phase comprises at least water and one or more freezing point depressors selected from the group consisting of sugars, salts or sugar-alcohols or a mixture thereof;
   - the emulsion comprises at least (W × A) wt% emulsifier by weight of the emulsion where:

     • W is the proportion of the water phase in the emulsion expressed as the weight percentage of the total emulsion; and
     • A is 0.0001;

   - the emulsion comprises at most (O × 0.2) wt% emulsifier by weight of the emulsion where:

     • O is the proportion of the oil phase in the emulsion expressed as the weight percentage of the total emulsion;

   - the emulsion comprises from 4 to 40 wt% of the one or more freezing point depressors by weight of the emulsion; and
   - the temperature at which the edible oil contains 25 wt% solid fat by weight of the edible oil is lower than temperature at which the water phase contains 25 wt% ice by weight of the water phase.

2. A water-in-oil emulsion according to claim 1 wherein the weight ratio of water phase to oil phase (WP:OP) is at most 90:10.

3. A water-in-oil emulsion according to claim 1 or claim 2 wherein the edible oil is selected from: corn seed oil, grape oil, linseed oil, sunflower oil, rapeseed oil, hemp oil, walnut oil, or a combination thereof.

4. A water-in-oil emulsion according to any one of claims 1 to 3 wherein the temperature at which the edible oil contains 25 wt% solid fat is at least 4°C lower than the temperature at which the water phase contains 25 wt% ice.

5. A water-in-oil emulsion according to any one of claims 1 to 4 wherein the average HLB of the emulsifier is from 0.25 to 4.

6. A water-in-oil emulsion according to any one of claims 1 to 5 wherein the emulsifier is selected from: glycerin fatty acid esters, organic acid esters of monoglycerides, polyglycerol esters of fatty acid, sorbitan esters of fatty acid, propylene glycol esters of fatty acid, sucrose esters of fatty acid, polyglycerol polyrhizoleate, lecithins, and egg yolk, or a mixture thereof.

7. A water-in-oil emulsion according to any one of claims 1 to 6 wherein A is at least 0.00025.

8. A water-in-oil emulsion according to any one of claims 1 to 7 wherein the emulsion comprises the one or more freezing point depressors in an amount of at least 5 wt% by weight of the emulsion.

9. A process for the preparation of a water-in-oil emulsion as claimed in any one of claims 1 to 8, the process comprising the steps of:

- preparing a precursor water phase comprising:

 • water in an amount of from 45 to 96 wt% by weight of the precursor water phase;
 • one or more freezing point depressors selected from the group consisting of sugars, salts or sugar-alcohols or a mixture thereof in an amount of from 4 to 40 wt% by weight of the precursor water phase;

- preparing a precursor oil phase comprising:

 • an edible oil in an amount of from 90 to 97.9 wt% by weight of the precursor oil phase; and
 • an emulsifier in an amount of from 0.05 to 20 wt% by weight of the precursor oil phase, the emulsifier having an average HLB of from 0.1 to 5,

wherein the temperature at which the edible oil contains 25 wt% solid fat by weight of the edible oil is lower than the temperature at which the water phase contains 25 wt% ice by weight of the water phase;
- combining the precursor water phase with the precursor oil phase while mixing so as to form the water-in-oil emulsion, wherein the weight ratio of water phase (WP) to oil phase (OP) of the resulting oil-in-water emulsion is from 94:6 to 70:30;

wherein the emulsification step is carried out at a temperature which is greater than the melting point of the precursor water phase.

10. A process as claimed in claim 9 wherein the precursor oil phase comprises the edible oil in an amount of at least 91 wt% by weight of the precursor oil phase.

11. A process as claimed in claim 9 or claim 10 wherein the precursor oil phase comprises the emulsifier in an amount of at least 0.1 wt% by weight of the precursor oil phase.

12. A process as claimed in any one of claims 9 to 11 wherein the precursor oil phase comprises a fat structurant and the emulsification step is carried out at a temperature which is greater than the melting point of the precursor water phase and less than the melting point of the fat structurant.

13. A process for the preparation of a frozen confection wherein the water-in-oil emulsion according to any one of claims 1 to 8 is quiescently frozen.

14. A frozen confection comprising the water-in-oil emulsion according to any one of claims 1 to 8.

**Patentansprüche**

1. Wasser-in-Öl-Emulsion zur Herstellung eines gefrorenen Konfekts, wobei die Emulsion eine Wasserphase (WP) und eine Ölphase (OP) in einem Gewichtsverhältnis (WP:OP) von 94:6 bis 70:30 umfasst, wobei

- die Ölphase mindestens ein essbares Öl und einen Emulgator umfasst, wobei der Emulgator einen durchschnittlichen HLB-Wert von 0,1 bis 5 aufweist;
- die Wasserphase mindestens Wasser und einen oder mehrere Gefrierpunktdepressoren umfasst, ausgewählt aus der Gruppe, bestehend aus Zuckern, Salzen oder Zuckeralkoholen oder einer Mischung davon;

- die Emulsion mindestens (W × A) Gew.-% Emulgator, bezogen auf das Gewicht der Emulsion, umfasst, wobei:

  • W der Anteil der Wasserphase in der Emulsion ist, ausgedrückt als Gewichtsprozent der gesamten Emulsion; und
  • A 0,0001 ist;

- die Emulsion höchstens (O × 0,2) Gew.-% Emulgator, bezogen auf das Gewicht der Emulsion, umfasst, wobei:

  • O der Anteil der Ölphase in der Emulsion ist, ausgedrückt als Gewichtsprozent der gesamten Emulsion;

- die Emulsion 4 bis 40 Gew.-% eines oder mehrerer Gefrierpunktdepressoren, bezogen auf das Gewicht der Emulsion, umfasst; und
- die Temperatur, bei der das essbare Öl 25 Gew.-% festes Fett, bezogen auf das Gewicht des essbaren Öls, enthält, niedriger als die Temperatur ist, bei der die Wasserphase 25 Gew.-% Eis, bezogen auf das Gewicht der Wasserphase, enthält.

2. Wasser-in-Öl-Emulsion nach Anspruch 1, wobei das Gewichtsverhältnis der Wasserphase zur Ölphase (WP:OP) höchstens 90:10 beträgt.

3. Wasser-in-Öl-Emulsion nach Anspruch 1 oder Anspruch 2, wobei das essbare Öl ausgewählt ist aus: Maissamenöl, Traubenöl, Leinsamenöl, Sonnenblumenöl, Rapsöl, Hanföl, Walnussöl oder einer Kombination davon.

4. Wasser-in-Öl-Emulsion nach irgendeinem der Ansprüche 1 bis 3, wobei die Temperatur, bei der das essbare Öl 25 Gew.-% festes Fett enthält, mindestens 4°C niedriger als die Temperatur ist, bei der die Wasserphase 25 Gew.-% Eis enthält.

5. Wasser-in-Öl-Emulsion nach irgendeinem der Ansprüche 1 bis 4, wobei der durchschnittliche HLB-Wert des Emulgators 0,25 bis 4 beträgt.

6. Wasser-in-Öl-Emulsion nach irgendeinem der Ansprüche 1 bis 5, wobei der Emulgator ausgewählt ist aus: Glycerinfettsäureestern, organischen Säureestern von Monoglyceriden, Polyglycerinestern von Fettsäure, Sorbitanestern von Fettsäure, Propylenglycolestern von Fettsäure, Saccharoseestern von Fettsäure, Polyglycerinpolyrhizoleat, Lecithinen und Eigelb oder einer Mischung davon.

7. Wasser-in-Öl-Emulsion nach irgendeinem der Ansprüche 1 bis 6, wobei A mindestens 0,00025 beträgt.

8. Wasser-in-Öl-Emulsion nach irgendeinem der Ansprüche 1 bis 7, wobei die Emulsion einen oder mehrere Gefrierpunktdepressoren in einer Menge von mindestens 5 Gew.-%, bezogen auf das Gewicht der Emulsion, umfasst.

9. Verfahren zur Herstellung einer Wasser-in-Öl-Emulsion, wie in irgendeinem der Ansprüche 1 bis 8 beansprucht, wobei das Verfahren die Schritte umfasst:

  - Herstellen einer Vorläufer-Wasserphase, umfassend:

    • Wasser in einer Menge von 45 bis 96 Gew.-%, bezogen auf das Gewicht der Vorläufer-Wasserphase;
    • einen oder mehrere Gefrierpunktdepressoren, ausgewählt aus der Gruppe, bestehend aus Zuckern, Salzen oder Zuckeralkoholen oder einer Mischung davon in einer Menge von 4 bis 40 Gew.-%, bezogen auf das Gewicht der Vorläufer-Wasserphase;

  - Herstellen einer Vorläufer-Ölphase, umfassend:

    • ein essbares Öl in einer Menge von 90 bis 97,9 Gew.-%, bezogen auf das Gewicht der Vorläufer-Ölphase; und
    • einen Emulgator in einer Menge von 0,05 bis 20 Gew.-%, bezogen auf das Gewicht der Vorläufer-Ölphase, wobei der Emulgator einen durchschnittlichen HLB-Wert von 0,1 bis 5 aufweist,

  wobei die Temperatur, bei der das essbare Öl 25 Gew.-% festes Fett, bezogen auf das Gewicht des essbaren Öls, enthält, niedriger als die Temperatur ist, bei der die Wasserphase 25 Gew.-% Eis, bezogen auf das Gewicht der Wasserphase, enthält;
- Kombinieren der Vorläufer-Wasserphase mit der Vorläufer-Ölphase unter Mischen, um die Wasser-in-Öl-Emulsion zu bilden, wobei das Gewichtsverhältnis der Wasserphase (WP) zur Ölphase (OP) der resultierenden Öl-in-Wasser-Emulsion 94:6 bis 70:30 beträgt;

wobei der Emulgierungsschritt bei einer Temperatur durchgeführt wird, die größer als der Schmelzpunkt der Vorläufer-Wasserphase ist.

10. Verfahren, wie im Anspruch 9 beansprucht, wobei die Vorläufer-Ölphase das essbare Öl in einer Menge von mindestens 91 Gew.-%, bezogen auf das Gewicht der Vorläufer-Ölphase, umfasst.

11. Verfahren, wie im Anspruch 9 oder Anspruch 10 beansprucht, wobei die Vorläufer-Ölphase den Emulgator in einer Menge von mindestens 0,1 Gew.-%, bezogen auf das Gewicht der Vorläufer-Ölphase, umfasst.

12. Verfahren, wie in irgendeinem der Ansprüche 9 bis 11 beansprucht, wobei die Vorläufer-Ölphase ein Fettstrukturierungsmittel umfasst und der Emulgierschritt bei einer Temperatur durchgeführt wird, die größer als der Schmelzpunkt der Vorläufer-Wasserphase und kleiner als der Schmelzpunkt des Fettstrukturierungsmittels ist.

13. Verfahren zur Herstellung eines gefrorenen Konfekts, wobei die Wasser-in-Öl-Emulsion nach irgendeinem der Ansprüche 1 bis 8 unbewegt gefroren wird.

14. Gefrorenes Konfekt, umfassend die Wasser-in-Öl-Emulsion nach irgendeinem der Ansprüche 1 bis 8.

**Revendications**

1. Emulsion eau-dans-huile pour la préparation d'une confiserie surgelée, l'émulsion comprenant une phase d'eau (WP) et une phase d'huile (OP) dans un rapport de masse (WP:OP) de 94:6 à 70:30 dans laquelle :

- la phase d'huile comprend au moins une huile comestible et un émulsifiant, l'émulsifiant ayant une HLB moyenne de 0,1 à 5;
- la phase d'eau comprend au moins de l'eau et un ou plusieurs agents abaissant le point de congélation choisis dans le groupe consistant en sucres, sels ou sucre-alcools ou un mélange de ceux-ci ;
- l'émulsion comprend au moins (W × A) % en masse d'émulsifiant en masse de l'émulsion où :

• W est la proportion de la phase d'eau dans l'émulsion exprimée comme le pourcentage en masse de l'émulsion totale ; et
• A est égal à 0,0001 ;

- l'émulsion comprend au plus (O × 0,2) % en masse d'émulsifiant en masse de l'émulsion où :

• O est la proportion de la phase d'huile dans l'émulsion exprimée comme le pourcentage en masse de l'émulsion totale ;

- l'émulsion comprend de 4 à 40 % en masse du un ou plusieurs agents abaissant le point de congélation en masse de l'émulsion ; et
- la température à laquelle l'huile comestible contient 25 % en masse de graisse solide en masse de l'huile comestible est inférieure à une température à laquelle la phase d'eau contient 25 % en masse de glace en masse de la phase d'eau.

2. Emulsion eau-dans-huile selon la revendication 1, dans laquelle le rapport en masse de phase d'eau à phase d'huile (WP:OP) est d'au plus 90:10.

3. Emulsion eau-dans-huile selon la revendication 1 ou revendication 2, dans laquelle l'huile comestible est choisie parmi : huile de maïs, huile de raisin, huile de lin, huile de tournesol, huile de colza, huile de chanvre, huile de noix, ou une combinaison de celles-ci.

4. Emulsion eau-dans-huile selon l'une quelconque des revendications 1 à 3, dans laquelle la température à laquelle l'huile comestible contient 25 % en masse de graisse solide est au moins 4°C inférieure à la température à laquelle la phase d'eau contient 25 % en masse de glace.

5. Emulsion eau-dans-huile selon l'une quelconque des revendications 1 à 4, dans laquelle la HLB moyenne de l'émulsifiant est de 0,25 à 4.

6. Emulsion eau-dans-huile selon l'une quelconque des revendications 1 à 5, dans laquelle l'émulsifiant est choisi parmi : des esters d'acides gras de glycérine, esters d'acides organiques de monoglycérides, esters de polyglycérol d'acides gras, esters de sorbitane d'acides gras, esters de propylène glycol d'acides gras, esters de saccharose d'acides gras, polyrhizoléate de polyglycérol, lécithines, et jaune d'oeuf, ou un mélange de ceux-ci.

7. Emulsion eau-dans-huile selon l'une quelconque des revendications 1 à 6, dans laquelle A est au moins égal à 0,00025.

8. Emulsion eau-dans-huile selon l'une quelconque des revendications 1 à 7, dans laquelle l'émulsion comprend les un ou plusieurs agents abaissant le point de congélation dans une quantité d'au moins 5 % en masse de l'émulsion.

9. Procédé pour la préparation d'une émulsion eau-dans-huile selon l'une quelconque des revendications 1 à 8, le procédé comprenant les étapes de :

- préparation d'une phase d'eau de précurseur comprenant :

• de l'eau dans une quantité de 45 à 96 % en masse de la phase d'eau de précurseur ;
• un ou plusieurs agents abaissant le point de congélation choisis dans le groupe consistant en sucres, sels ou sucre-alcools ou un mélange de ceux-ci dans une quantité de 4 à 40 % en masse de la phase d'eau de précurseur ;

- préparation d'une phase d'huile de précurseur comprenant :

• une huile comestible dans une quantité de 90 à 97,9 % en masse de la phase d'huile de précurseur ; et
• un émulsifiant dans une quantité de 0,05 à 20 % en masse de la phase d'huile de précurseur, l'émulsifiant ayant une HLB moyenne de 0,1 à 5,

dans lequel la température à laquelle l'huile comestible contient 25 % en masse de graisse solide en masse de l'huile comestible est inférieure à la température à laquelle la phase d'eau contient 25 % en masse de glace en masse de la phase d'eau ;
- combinaison de la phase d'eau de précurseur avec la phase d'huile de précurseur tout en mélangeant afin de former l'émulsion eau-dans-huile, dans lequel le rapport de masse de phase d'eau (WP) à phase d'huile (OP) de l'émulsion huile-dans-eau résultante est de 94:6 à 70:30 ;

dans lequel l'étape d'émulsification est réalisée à une température qui est supérieure au point de fusion de la phase d'eau de précurseur.

10. Procédé selon la revendication 9, dans lequel la phase d'huile de précurseur comprend l'huile comestible dans une quantité d'au moins 91 % en masse de la phase d'huile de précurseur.

11. Procédé selon la revendication 9 ou revendication 10, dans lequel la phase d'huile de précurseur comprend l'émulsifiant dans une quantité d'au moins 0,1 % en masse de la phase d'huile de précurseur.

12. Procédé selon l'une quelconque des revendications 9 à 11, dans lequel la phase d'huile de précurseur comprend un structurant de graisse et l'étape d'émulsification est réalisée à une température qui est supérieure au point de fusion de la phase d'eau de précurseur et inférieure au point de fusion du structurant de graisse.

13. Procédé pour la préparation d'une confiserie surgelée dans lequel l'émulsion eau-dans-huile selon l'une quelconque des revendications 1 à 8 est soumise à une congélation statique.

14. Confiserie surgelée comprenant l'émulsion eau-dans-huile selon l'une quelconque des revendications 1 à 8.

## REFERENCES CITED IN THE DESCRIPTION

**Patent documents cited in the description**

- EP 0986959 A1
- EP 1875810 A1
- JP 64063341 B